# EUROPEAN PATENT APPLICATION

(11) **EP 4 050 909 A1**
(43) Date of publication of application: **31.08.2022**
(21) Application number: 20878495.9
(22) Date of filing: 10.09.2020
(51) Int. Cl.: H04R 3/00, G10L 25/30, H04N 21/4402, H04N 21/442

(54) **INFORMATION PROCESSING DEVICE, INFORMATION PROCESSING METHOD, AND ARTIFICIAL INTELLIGENCE SYSTEM**

(30) Priority: 23.10.2019 JP 2019193032
(71) Applicant: Sony Group Corporation, Tokyo 108-0075 (JP)
(72) Inventor: HIRAMATSU, Takeshi, Tokyo 141-8610 (JP); KOBAYASHI, Yoshiyuki, Tokyo 108-0075 (JP); ADACHI, Hiroshi, Tokyo 141-8610 (JP)
(74) Representative: 2SPL Patentanwälte PartG mbB
(86) International application number: PCT/JP2020/034290
(87) International publication number: WO 2021/079640

(57) **Abstract**

An information processing device that processes video or audio outputs from a television receiver using artificial intelligence is to be provided.

The information processing device includes: an acquisition unit that acquires reproduction content; a detection unit that acquires information regarding a viewing status; a control unit that estimates reproduction content to be output, on the basis of information regarding a user who views the reproduction content and information regarding the creator who has created the reproduction content; and an output unit that outputs the estimated reproduction content. The control unit estimates signal processing for reducing the recognition gap between the user and the creator with respect to content.

## Description

### TECHNICAL FIELD

The technology disclosed in this specification (hereinafter referred to as "the present disclosure") relates to an information processing device an information processing method using an artificial intelligence, and an artificial intelligence system.

### BACKGROUND ART

Television has been widely used for a long time. With the recent increase in the screen size of a television receiver, the quality of reproduction content is being enhanced through image quality enhancement such as a super-resolution technique and dynamic range expansion (see Patent Document 1, for example), and sound quality enhancement such as band extension (see Patent Document 2, for example).

Content created in an authoring system by a content creator is distributed by various means such as broadcasting, streaming, and recording media. In a reproduction device, signal processing such as image quality enhancement and sound quality enhancement is then performed on a received video stream and a received audio stream. After that, the video stream and the audio stream are output from a display and a speaker, so that a user can view the content. Here, there is a possibility that a gap is caused between the recognition by the user of the viewing content and the recognition by the creator of the created content, and the user cannot view the content as intended by the creator.

One of the methods for eliminating differences in subjective recognition between a user and a creator is an image display system in which information about the reference white (diffuse white) selected by the creator is transmitted from a source device to a sink device using a Moving Picture Experts Group (MPEG) transmission container, for example, and dynamic range conversion is performed at the sink device side so as to reflect the creator's intention on the basis of the reference white (see Patent Document 3).

### CITATION LIST

### PATENT DOCUMENTS

Patent Document 1: Japanese Patent Application Laid-Open No. 2019-23798
Patent Document 2: Japanese Patent Application Laid-Open No. 2017-203999
Patent Document 3: WO 2016/038950
Patent Document 4: Japanese Patent Application Laid-Open No. 2015-92529
Patent Document 5: JP 4915143 B2
Patent Document 6: Japanese Patent Application Laid-Open No. 2007-143010

### SUMMARY OF THE INVENTION

### PROBLEMS TO BE SOLVED BY THE INVENTION

An object of the technology according to the present disclosure is to provide an information processing device and an information processing method for processing a video image or an audio output from a television set using an artificial intelligence, and an artificial intelligence system.

### SOLUTIONS TO PROBLEMS

A first aspect of the technology according to the present disclosure is
an information processing device that includes:
an acquisition unit that acquires reproduction content;
a detection unit that acquires information regarding a viewing status;
a control unit that estimates reproduction content to be output, on the basis of information regarding a user who views the reproduction content and information regarding a creator who has created the reproduction content; and
an output unit that outputs the estimated reproduction content.

Here, the information regarding the user is information regarding the state of the user, the profile of the user, the installation environment of the information processing device, the hardware information about the information processing device, the signal processing to be performed in the information processing device, and the like, and includes information detected by the detection unit.

Meanwhile, the information regarding the creator is information regarding the state of the creator, the profile of the creator, the creation environment of the content, the hardware information about the device used in creation of the content, the signal processing to be performed when the content is uploaded, and the like, and includes information corresponding to the information regarding the user.

The control unit estimates signal processing for the reproduction content. The signal processing for the reproduction content herein is a process of associating the video image or the sound of the reproduction content recognized by the user with the video image or the sound of the reproduction content recognized by the creator.

The reproduction content includes a video signal, and the signal processing includes at least one of the processes: resolution conversion, dynamic range conversion, noise reduction, and gamma processing. Also, the reproduction content includes an audio signal, and the signal processing includes band extension and/or sound localization.

Further, a second aspect of the technology according to the present disclosure is an information processing method that includes:
an acquisition step of acquiring reproduction content;
a detection step of acquiring information regarding a viewing status;
a control step of estimating reproduction content to be output, on the basis of information regarding a user who views the reproduction content and information regarding the creator who has created the reproduction content; and
an output step of outputting the estimated reproduction content.

Further, a third aspect of the technology according to the present disclosure is
an artificial intelligence system that includes:
a first neural network that learns correlations among reproduction content, information regarding a user who views the reproduction content, and information regarding the creator who has created the reproduction content;
a second neural network that learns correlations among the reproduction content, information regarding the user, and recognition by the user of the reproduction content; and
a third neural network that learns correlations among the reproduction content, information regarding the creator, and recognition by the creator of the reproduction content.

It should be noted that the term "system" means a logical assembly of a plurality of devices (or functional modules that realize specific functions), and the respective devices or functional modules are not necessarily in a single housing.

### EFFECTS OF THE INVENTION

By the technology according to the present disclosure, it is possible to provide an information processing device, an information processing method, and an artificial intelligence system that process video or audio outputs from a television device so as to reduce the gap between recognition by the user of viewed content and recognition by the creator of created content, using an artificial intelligence.

Note that the advantageous effects described in this specification are merely examples, and the advantageous effects to be brought about by the technology according to the present disclosure are not limited to them. Furthermore, the technology according to the present disclosure may exhibit additional advantageous effects, in addition to the above described advantageous effects.

Other objects, features, and advantages of the technology according to the present disclosure will be made apparent by the embodiments described below and the detailed descriptions with reference to the accompanying drawings.

### BRIEF DESCRIPTION OF DRAWINGS

Fig. 1 is a diagram showing an example configuration of a system for viewing video content.
Fig. 2 is a diagram showing an example configuration of a television receiving device 100.
Fig. 3 is a diagram showing an example application of a panel speaker technology to a display.
Fig. 4 is a diagram showing an example configuration of a sensor unit 109.
Fig. 5 is a diagram showing a flow from creation to viewing of content.
Fig. 6 is a diagram showing an example configuration of an artificial intelligence system 600.
Fig. 7 is a diagram showing an example of installation of effect producing devices.
Fig. 8 shows an example configuration of a television receiving device 100 using a scene-producing effect.
Fig. 9 is a diagram showing an example configuration of an artificial intelligence system 900.
Fig. 10 is a diagram showing an example configuration of an artificial intelligence system 1000.
Fig. 11 is a diagram showing a flow before content is viewed by each user.
Fig. 12 is a diagram showing an example configuration of an artificial intelligence system 1200.

### MODES FOR CARRYING OUT THE INVENTION

The following is a detailed description of embodiments of the technology according to the present disclosure, with reference to the drawings.

### A. System Configuration

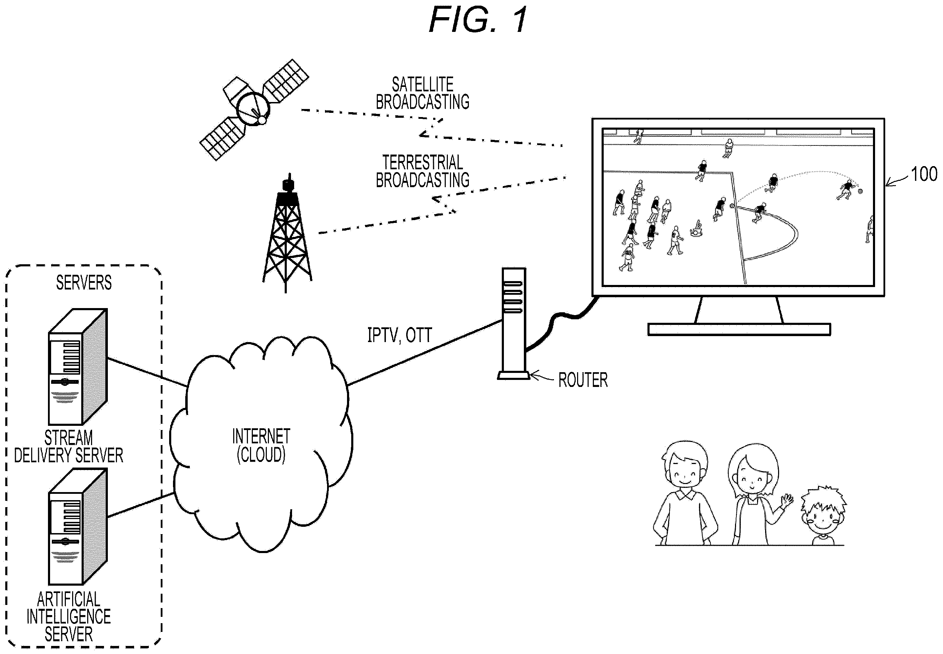

Fig. 1 schematically shows an example configuration of a system for viewing video content.

A television receiving device 100 is installed in a living room in which family members gather, or in a private room of the user, for example. Note that, in this embodiment, a simple term "user" refers to a viewer who views (including a case where the viewer has a plan to view) video content displayed on the television receiving device 100, unless otherwise specified.

The television receiving device 100 is equipped with a display that displays video content and a speaker that outputs sound. The television receiving device 100 includes a built-in tuner for selecting and receiving broadcast signals, for example, or a set-top box having a tuner function is externally connected thereto, so that broadcast services provided by television stations can be used. Broadcast signals may be either ground waves or satellite waves.

The television receiving device 100 can also use a broadcast video distribution service using a network such as IPTV or OTT (Over The Top), for example. Therefore, the television receiving device 100 is equipped with a network interface card, and is interconnected to an external network such as the Internet via a router or an access point using communication based on an existing communication standard such as Ethernet (registered trademark) or Wi-Fi (registered trademark). In its functional aspect, the television receiving device 100 is also a content acquiring device, a content reproducing device, or a display device that is equipped with a display having a function to acquire or reproduce various kinds of content to be presented to the user by acquiring various kinds of reproduction content such as video and audio by streaming or downloading via broadcast waves or the Internet.

A stream delivery server that delivers video streams is installed on the Internet, and provides a broadcast video distribution service to the television receiving device 100.

Also, an infinite number of servers providing various kinds of services are installed on the Internet. An example of a server is a stream delivery server that provides a broadcast video stream distribution service using a network such as IPTV or OTT, for example. On the side of the television receiving device 100, the browser function is activated to issue a Hyper Text Transfer Protocol (HTTP) request to the stream delivery server, for example, so that the stream distribution service can be used.

Further, in this embodiment, it is assumed that there also exists an artificial intelligence server that provides the functions of an artificial intelligence to clients via the Internet (or via a cloud). An artificial intelligence is a function that artificially realizes, with software or hardware, the functions of the human brain, such as learning, reasoning, data creating, and designing/planning, for example. An artificial intelligence normally uses a learning model represented by a neural network imitating a human cranial nerve circuit. A neural network is a network formed with a connection between artificial neurons (hereinafter also referred to simply as "neurons") via synapses. An artificial intelligence has a mechanism for constructing a learning model for estimating an optimum solution (output) to a problem (input) while changing a coupling weight coefficient between neurons, by repeating learning using learning data. A learned neural network is indicated as a learning model having an optimum coupling weight coefficient between neurons. Further, the artificial intelligence server is designed to be provided with a neural network that performs deep learning (DL). In a case where deep learning is performed, the number of sets of learning data and the number of synapses are large. Therefore, it is considered appropriate to perform deep learning using a huge computer resource such as a cloud. Note that an "artificial intelligence server" in this specification is not necessarily a single server device, but may be in the form of a cloud that provides a cloud computing service, for example.

### B. Configuration of a Television Receiving Device

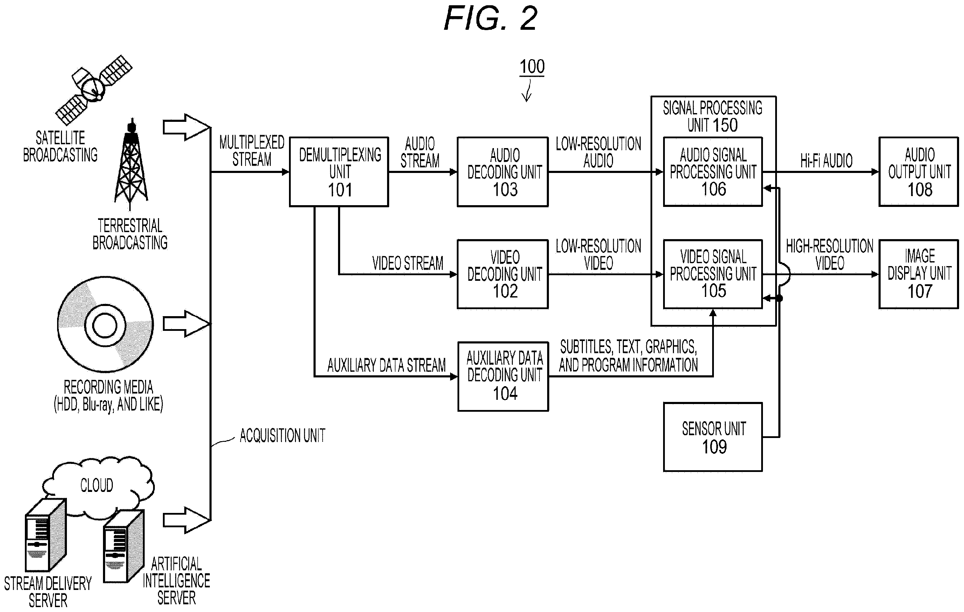

Fig. 2 shows an example configuration of the television receiving device 100. The television receiving device 100 shown in the drawing includes an acquisition unit that acquires information from the outside. The acquisition unit herein includes a tuner for selecting and receiving a broadcast signal, a high-definition multimedia interface (HDMI) (registered trademark) interface for inputting a reproduction signal from a media reproduction device, and a network interface (NIC) for network connection. However, Fig. 2 does not show the configuration of the acquisition unit.

The acquisition unit has a function to acquire the content to be provided to the television receiving device 100. The mode for providing content to the television receiving device 100 may be a broadcast signal in terrestrial broadcasting, satellite broadcasting, or the like, a reproduction signal reproduced from a recording medium such as a hard disk drive (HDD) or Blu-ray, streaming content distributed from a streaming server in a cloud, or the like. Examples of broadcast video distribution services using a network include IPTV and OTT. Further, such content is supplied, to the content reproduction system 100, as a multiplexed bitstream obtained by multiplexing bit streams of respective sets of media data such as video, audio, and auxiliary data (subtitles, text, graphics, program information, and the like). In the multiplexed bitstream, the data of the respective media such as video and audio data is multiplexed according to the MPEG2 System standard, for example. Also, in this embodiment, the acquisition unit acquires, from the outside, a learning result (such as a coupling weight coefficient between neurons in a neural network) of deep learning in a cloud.

The television receiving device 100 includes a demultiplexing unit (demultiplexer) 101, a video decoding unit 102, an audio decoding unit 103, an auxiliary data decoding unit 104, a video signal processing unit 105, an audio signal processing unit 106, an image display unit 107, and an audio output unit 108. Note that the television receiving device 100 may be a terminal device such as a set-top box, and may be designed to process a received multiplexed bitstream, and output the processed video and audio signals to the television receiving device including the image display unit 107 and the audio output unit 108.

The demultiplexing unit 101 demultiplexes a multiplexed bitstream received as a broadcast signal, a reproduction signal, or streaming data from the outside into a video bitstream, an audio bitstream, and an auxiliary bitstream, and distributes the demultiplexed bitstreams to each of the video decoding unit 102, the audio decoding unit 103, and the auxiliary data decoding unit 104 in the subsequent stages.

The video decoding unit 102 performs a decoding process on an MPEG-encoded video bitstream, for example, and outputs a baseband video signal. Note that, alternatively, a video signal that is output from the video decoding unit 102 may be of a low-resolution or standard-resolution video image, or of a low-dynamic-range (LDR) or standard-dynamic-range (SDR) video image.

The audio decoding unit 103 performs a decoding process on an audio bitstream encoded by a coding method such as MPEG Audio Layer 3 (MP3) or High Efficiency MPEG4 Advanced Audio Coding (HE-AAC), for example, and outputs a baseband audio signal. Note that an audio signal that is output from the audio decoding unit 103 is assumed to be a low-resolution or standard-resolution audio signal having some range such as a high-tone range removed or compressed.

The auxiliary data decoding unit 104 performs a decoding process on an encoded auxiliary bitstream, and outputs subtitles, text, graphics, program information, and the like.

The television receiving device 100 includes a signal processing unit 150 that performs signal processing and the like on reproduction content. The signal processing unit 150 includes the video signal processing unit 105 and the audio signal processing unit 106.

The video signal processing unit 105 performs video signal processing on the video signal output from the video decoding unit 102, and the subtitles, the text, the graphics, the program information, and the like output from the auxiliary data decoding unit 104. The video signal processing described herein may include image quality enhancement processes such as noise reduction, a resolution conversion process with super-resolution or the like, a dynamic range conversion process, and gamma processing. In a case where the video signal output from the video decoding unit 102 is of a low-resolution or standard-resolution video image, or of a low-dynamic-range or standard-dynamic-range video image, the video signal processing unit 105 performs super-resolution processing for generating a high-resolution video signal from a low-resolution or standard-resolution video signal, or an image quality enhancement process for achieving a higher dynamic range. The video signal processing unit 105 may perform the video signal processing after combining the main video signal output from the video decoding unit 102 and the auxiliary data such as subtitles output from the auxiliary data decoding unit 104, or may perform the combining process after performing an image quality enhancement process separately on the main video signal and the auxiliary data. In any case, the video signal processing unit 105 performs video signal processing such as super-resolution processing and dynamic range enhancement, within the range of screen resolution or the luminance dynamic range allowed by the image display unit 107, which is the output destination of the video signal.

In this embodiment, the video signal processing unit 105 is to perform video signal processing such as noise reduction, super-resolution processing, a dynamic range conversion process, and gamma processing, with an artificial intelligence using a learning model represented by a neural network. It is expected to perform optimum video signal processing by learning the learning model beforehand through deep learning.

The audio signal processing unit 106 performs audio signal processing on the audio signal output from the audio decoding unit 103. An audio signal that is output from the audio decoding unit 103 is a low-resolution or standard-resolution audio signal having some range such as a high-tone range removed or compressed. The audio signal processing unit 106 may perform a sound quality enhancement process for extending the band of a low-resolution or standard-resolution audio signal, to obtain a high-resolution audio signal including the removed or compressed range. Note that the audio signal processing unit 106 may perform a sound localization process using a plurality of speakers, in addition to sound quality enhancement such as band extension.

In this embodiment, the audio signal processing unit 106 is to perform audio signal processing such as band extension and sound localization with an artificial intelligence using a learning model represented by a neural network. It is expected to perform optimum audio signal processing by learning the learning model beforehand through deep learning. Note that the signal processing unit 150 having a single neural network that performs video signal processing and audio signal processing in combination may be formed.

The image display unit 107 presents, to the user (a viewer or the like of the content), a screen that displays a video image on which video signal processing such as image quality enhancement has been performed by the video signal processing unit 105. The image display unit 107 is a display device that is formed with a liquid crystal display, an organic electro-luminescence (EL) display, a light emitting display using fine light emitting diode (LED) elements as pixels (see Patent Document 4, for example), or the like, for example.

Alternatively, the image display unit 107 may be a display device to which a local dimming technology for controlling the luminance of each of the regions obtained by dividing the screen into a plurality of regions is applied. In the case of a display using a transmissive liquid crystal panel, it is possible to improve luminance contrast by increasing the luminance of the backlight corresponding to the regions with a high signal level and dimming the backlight corresponding to the regions with a low signal level. In a display device of this local dimming type, an enhancement technique for causing concentrative light emission by distributing the electric power saved at the darker portions to the regions with a high signal level is further utilized, so that the luminance in a case where white display is partially performed is made higher (while the output power of the entire backlight remains constant), and a high dynamic range can be obtained (see Patent Document 5, for example).

The audio output unit 108 outputs audio subjected to audio signal processing such as sound quality enhancement at the audio signal processing unit 106. The audio output unit 108 includes a sound generation element such as a speaker. For example, the audio output unit 108 may be a speaker array (a multichannel speaker or an ultra-multichannel speaker) formed with a plurality of speakers combined, and some or all of the speakers may be externally connected to the television receiving device.

In a case where the audio output unit 108 includes a plurality of speakers, it is possible to perform sound localization by reproducing audio signals using a plurality of output channels. Furthermore, by increasing the number of channels and multiplexing speakers, it is possible to control the sound field with higher resolution. An external speaker may be installed in front of the television set like a sound bar, or may be wirelessly connected to the television set like a wireless speaker. Also, the speaker may be a speaker connected to another audio product via an amplifier or the like. Alternatively, an external speaker may be a smart speaker that is equipped with a speaker and is capable of audio input, a wireless headphone/headset, a tablet, a smartphone, a personal computer (PC), a so-called smart home appliance such as a refrigerator, a washing machine, an air conditioner, a cleaner, or a lighting device, or an Internet of Things (IoT) home appliance.

Other than a conical speaker, a flat panel speaker (See Patent Document 6, for example) can be used for the audio output unit 108. A speaker array in which different types of speakers are combined can or course be used as the audio output unit 108. Further, the speaker array may include a speaker that performs audio output by causing the image display unit 107 to vibrate with one or more vibration exciters (actuators) that excite vibration. The vibration exciters (actuators) may be added to the image display unit 107.

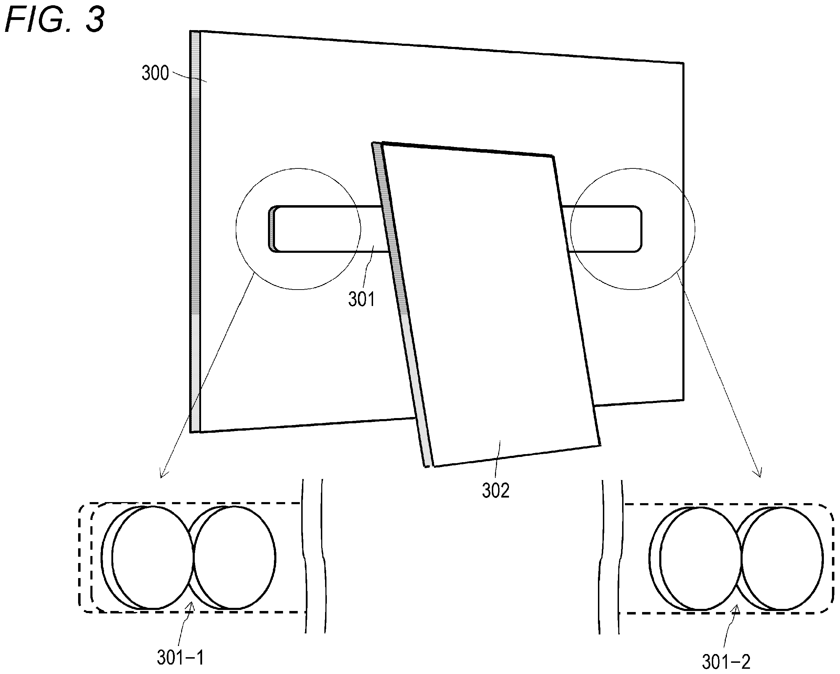

Fig. 3 shows an example application of a panel speaker technology to a display. A display 300 is supported by a stand 302 on the back. A speaker unit 301 is attached to the back surface of the display 300. A vibration exciter 301-1 is disposed at the left end of the speaker unit 301, and also, a vibration exciter 301-2 is disposed at the right end, to constitute a speaker array. The respective vibration exciters 301-1 and 301-2 can cause the display 300 to vibrate and output sound, on the basis of right and left audio signals. The stand 202 may have an internal subwoofer that outputs low sound. Note that the display 300 corresponds to the image display unit 107 using an organic EL element.

Referring back to Fig. 2, explanation of the configuration of the television receiving device 100 is continued.

A sensor unit 109 includes both a sensor provided in the main part of the television receiving device 100 and a sensor externally connected to the television receiving device 100. The externally connected sensor includes a sensor built in another consumer electronics (CE) device or an IoT device existing in the same space as the television receiving device 100. In this embodiment, it is assumed that sensor information obtained from the sensor unit 109 is neural network input information to be used in the video signal processing unit 105 and the audio signal processing unit 106. However, the neural network will be described later in detail.

### C. Sensing Function

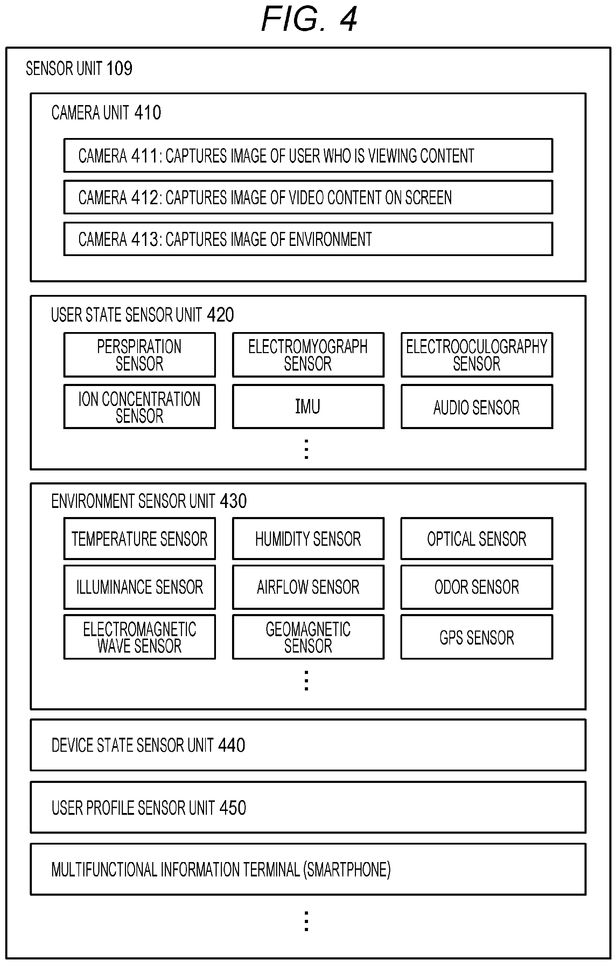

Fig. 4 schematically shows an example configuration of the sensor unit 109 included in the television receiving device 100. The sensor unit 109 includes a camera unit 410, a user state sensor unit 420, an environment sensor unit 430, a device state sensor unit 440, and a user profile sensor unit 450. In this embodiment, the sensor unit 109 is used to acquire various kinds of information regarding the viewing status of the user.

The camera unit 410 includes a camera 411 that captures an image of the user who is viewing the video content displayed on the image display unit 107, a camera 412 that captures an image of the video content displayed on the image display unit 107, and a camera 413 that captures an image of the inside of the room (or the installation environment) in which the television receiving device 100 is installed.

The camera 411 is installed in the vicinity of the center of the upper edge of the screen of the image display unit 107, for example, and appropriately captures an image of the user who is viewing the video content. The camera 412 is installed at a position facing the screen of a display unit 219, for example, and captures an image of the video content being viewed by the user. Alternatively, the user may wear goggles equipped with the camera 412. Also, the camera 412 has a function to record the sound of the video content. Meanwhile, the camera 413 is formed with a full-dome camera or a wide-angle camera, for example, and captures an image of the inside of the room (or the installation environment) in which the television receiving device 100 is installed. Alternatively, the camera 413 may be a camera mounted on a camera table (camera platform) rotatable about each of the axes of roll, pitch, and yaw, for example. However, in a case where sufficient environment data can be acquired by the environment sensor 430 or where any environment data is unnecessary, the camera 410 is unnecessary.

The user state sensor unit 420 includes one or more sensors that acquire state information regarding the state of the user. The user state sensor unit 420 intends to acquire state information that includes the user's activity state (whether the user is viewing the video content), the user's action state (a moving state such as standing still, walking, or running, an eye open/close state, a line-of-sight direction, and a pupil size), a mental state (a sensation level, an excitement level, or an arousal level indicating whether the user is immersed or concentrated in the video content, an emotion, an affect, and the like), and a physiological state, for example. The user state sensor unit 420 may include various sensors such as a perspiration sensor, an electromyography sensor, an electrooculography sensor, a brainwave sensor, a breath sensor, a gas sensor, an ion concentration sensor, and an inertial measurement unit (IMU) that measures behaviors of the user, and an audio sensor (a microphone or the like) that collects utterances of the user. Note that the microphone is not necessarily integrated with the television receiving device 100, and may be a microphone mounted on a product installed in front of a television set, such as a sound bar. Alternatively, an external microphone equipped device connected in a wired or wireless manner may be used. The external microphone equipped device may be a smart speaker that is equipped with a microphone and is capable of audio input, a wireless headphone/headset, a tablet, a smartphone, a PC, a so-called smart home appliance such as a refrigerator, a washing machine, an air conditioner, a cleaner, or a lighting device, or an IoT home appliance.

The environment sensor unit 430 includes various sensors that measure information regarding the environment such as the room in which the television receiving device 100 is installed. For example, the environment sensor unit 430 includes a temperature sensor, a humidity sensor, an optical sensor, an illuminance sensor, an airflow sensor, an odor sensor, an electromagnetic wave sensor, a geomagnetic sensor, a global positioning system (GPS) sensor, an audio sensor (a microphone or the like) that collects ambient sound, and the like. The environment sensor unit 430 may also acquire information such as the size of the room in which the television receiving device 100 is placed, the position of the user, and the brightness of the room.

The device state sensor unit 440 includes one or more sensors that acquire the internal state of the television receiving device 100. Alternatively, circuit components such as a video decoder 208 and an audio decoder 209 may have the functions to output an input signal state, a processing state of an input signal, and the like to the outside, and may serve as sensors that detect the internal state of the device. The device state sensor unit 440 may also detect an operation performed by the user on the television receiving device 100 or some other device, and store the past operation history of the user. Further, the device state sensor unit 440 may acquire information regarding the performance and specification of the device. The device state sensor unit 440 may be a memory such as an internal read only memory (ROM) that records information regarding the performance and specifications of the device, or a reader that reads information from such a memory.

The user profile sensor unit 450 detects profile information regarding the user who is viewing video content on the television receiving device 100. The user profile sensor unit 450 does not necessarily include sensor elements. For example, the user profile such as the age and the gender of the user may be detected on the basis of a face image of the user captured by the camera 411, an utterance of the user collected by an audio sensor, and the like. Also, a user profile acquired by a multifunctional information terminal carried by the user, such as a smartphone, may be acquired by cooperation between the television receiving device 100 and the smartphone. However, the user profile sensor unit 450 does not need to detect sensitive information related to the privacy and secrecy of the user. Furthermore, there is no need to detect the profile of the same user every time video content is viewed, and a memory such as an electrically erasable and programmable ROM (EEPROM) that stores user profile information acquired once may be used.

Also, a multifunctional information terminal carried by the user, such as a smartphone, may be used as the user state sensor unit 420, the environment sensor unit 430, or the user profile sensor unit 450, through cooperation between the television receiving device 100 and the smartphone. For example, sensor information acquired by a sensor included in a smartphone, and data managed by applications such as a health care function (a pedometer or the like), a calendar, a schedule book, a memorandum, an e-mail, a browser history, and a posting and browsing history of a social network service (SNS) may be added to the state data and the environment data of the user. Also, a sensor included in some other CE device or an IoT device existing in the same space as the television receiving device 100 may be used as the user state sensor unit 420 or the environment sensor unit 430. Further, a sound of an intercom may be detected, or a visitor may be detected by communication with an intercom system. Furthermore, a luminance meter or a spectrum analysis unit that acquires video and audio outputs from the television receiving device 100, and analyzes the acquired video and audio may be provided as a sensor.

### D. Differences in Recognition Between the User And the Creator

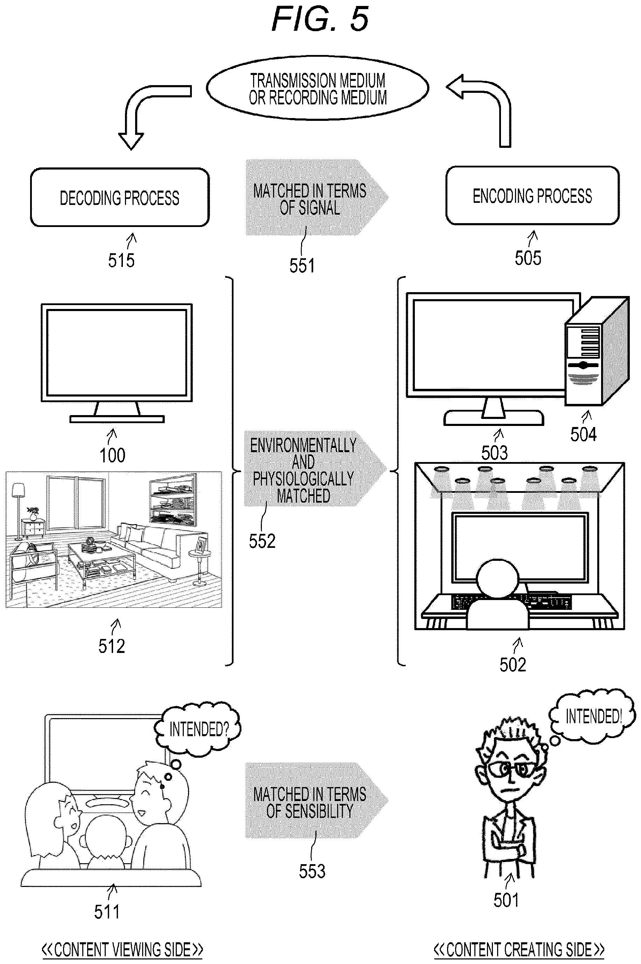

Fig. 5 schematically shows a flow from when content is created on the content creation side till when the user views the content on the television receiving device 100 in a system like that shown in Fig. 1. In Fig. 5, the right side is the content creation side, and the left side is the content viewing side.

A creator 501 excels in video and audio editing and creating techniques. In an organized creation environment 502 that has sound insulation and appropriate indoor lighting, the creator 501 creates and edits content, using a professional-use monitor 503 having a high resolution and a high dynamic range, and a highly functional authoring system 504.

Note that, when a video signal and an audio signal that have been created or edited by the creator 501 are output to the outside of the authoring system 504, signal processing, such as resolution conversion of the video signal from a high-resolution image to a standard-resolution image (or to a low-resolution image), dynamic range conversion from a high dynamic range to a standard dynamic range (or to a low dynamic range), or band narrowing for removing or compressing the component of a hardly audible band in the audio signal, is performed so as to conform to the specifications of a display and a speaker normally owned by a general user 511.

Further, the content created or edited by the creator 501 is subjected to an encoding process 505 by a predetermined coding method such as MPEG, for example, and is then delivered to the content viewing side via a transmission medium such as broadcast or the Internet, or via a recording medium such as Blu-ray.

On the content viewing side, in turn, the television receiving device 100 or some other content reproducing device (hereinafter referred to simply as the "television receiving device 100") receives the encoded data via a transmission medium or a recording medium. The television receiving device 100 is installed in a living room 512 or the like of the user's home, for example. In the television receiving device 100, a decoding process 515 according to the predetermined coding method such as MPEG is performed on the received encoded data, to separate the encoded data into a video stream and an audio stream. After further signal processing is performed, the video image is displayed on the screen, and the audio is output. The user 511 then views the video image and listens to the audio from the television receiving device 100.

The signal processing on the video signal in the television receiving device 100 includes noise reduction and at least one of the following processes: super-resolution processing, a dynamic range conversion process, and gamma processing that are compatible with the performance of the image display unit 107. Meanwhile, the signal processing on the audio signal in the television receiving device 100 includes at least one of the following processes: a band extension process and a sound localization process that are compatible with the performance of the audio output unit 108. Further, the signal processing on the video signal and the audio signal is performed by the video signal processing unit 105 and the audio signal processing unit 106, respectively.

Here, there is a possibility that a gap is caused between recognition by the creator 501 of the created content and recognition by the user 511 of the viewed content, and the user 511 cannot view the content as intended by the creator 501. For example, there is a possibility that the user 511 visually recognizes, on the television screen, a different color from the color intended by the creator 501 at the time of creation or editing of the content. Also, there is a possibility of a phenomenon in which recognition of the content differs between the creator 501 and the user 511, such as that the user 511 viewing the content does not have emotions of delight, anger, sorrow, and pleasure as intended by the creator 501 at the time of creation or editing, or, even if the user 511 has emotions as intended by the creator 501, the levels of delight, anger, sorrow, and pleasure do not match the levels intended by the creator 501.

The causes of a gap between recognition by the creator 501 of created content and recognition by the user 511 of viewed content may be as described below.

### (1) Causes Due to Signal Processing (Signal Mismatch)

A gap is caused between recognition by the creator 501 of created content and recognition by the user 511 of viewed content due to a signal mismatch that the video image and the audio become different from the original intention of the creator 501 in the course of signal processing, such as irreversible execution of encoding and decoding processes and a compression/expansion process, generation of noise, image quality enhancement, and sound quality enhancement, before and after the content is transmitted via a transmission medium or before and after the content is reproduced from a recording medium. Noise occurs when a RAW signal handled on the content creation side is transmitted to the content viewing side, and further, a signal mismatch occurs due to irreversible processing such as color sampling and gradation conversion in the course of the encoding and decoding processes.

### (2) Causes Due to Hardware Characteristics (Environmental Mismatch (1))

The creator 501 creates and edits content, using the professional-use monitor 503 having a high resolution and a high dynamic range, and the highly functional authoring system 504. On the other hand, the user 511 views content with a commercially available television receiving device 100. Even if the same video signal and the audio signal are input to the professional-use monitor 503 and the television receiving device 100, different video images and different audio images are output, due to hardware mismatches such as differences in performance and characteristics. For example, in a case where the display device is liquid crystal, a difference is caused in the video image due to differences in viewing angle characteristics, response characteristics, and temperature characteristics. Further, in a case where the display device is an LED, a difference is caused in the video image due to differences in response characteristics and temperature characteristics for each color.

Note that performance information and characteristics information regarding video images and the like may be information that is determined on the basis of the screen size, the maximum luminance, the resolution, the light emission mode of the display, and the type of the backlight, for example. Performance information and characteristics information regarding audio and the like may be information that is determined on the basis of the maximum output of the speaker, the number of corresponding channels, the material of the speaker, and the audio output method, for example. This kind of performance information and characteristics information can be acquired from information about the specifications of each product. Also, the performance difference and the characteristics difference between the professional-use monitor 503 and the television receiving device 100 may be the results of analysis of video signals and audio signals output from the respective devices, the analysis using a luminance meter or a spectrum analysis device.

### (3) Causes Due to Environment (Environmental Mismatch (2))

The creator 501 creates and edits content in the organized creation environment 502 that has sound insulation and appropriate indoor lighting. On the other hand, the user 511 views content on the television receiving device 100 installed in the living room 512 or the like of the user's home. Between the creation environment 502 and the living room 512, indoor lighting and natural light have different intensities, different irradiation angles, and different colors. Further, the intensity, the reflection angle, and the color of reflected light on the screen are different between the professional-use monitor 503 installed in the creation environment 502 and the television receiving device 100. Because of such an environmental mismatch, a gap is caused between recognition by the creator 501 of created content and recognition by the user 511 of viewed content.

Also, a gap is caused between recognition by the creator 501 of created content and recognition by the user 511 of viewed content due to a difference in the number of viewers existing in the respective viewing environments, which are the creation environment 502 and the living room 512, and a difference in the position and posture of each viewer (in other words, the distance to the screen and the line-of-sight angle with respect to the screen). For example, in a case where the user 511 is viewing content together with a plurality of persons such as family members, the emotional level is raised when the family members empathize with each other for the same scene. Also, when the family members are talking about a topic other than the content, the emotional level does not change for each scene. Further, in a case where the user 511 is viewing content together with a plurality of persons such as family members, the user 511 is not necessarily viewing the video image from the front of the screen of the television receiving device 100, but may be viewing the video image from an oblique direction. In a case where the user 511 is viewing the video image from an oblique direction, the change in the emotional level is smaller than that in a case where the user is viewing the video image from the front. Further, in a case where the user 511 is viewing content in a "distracted manner" while operating a smartphone or the like, the level of attention to the content significantly drops, and accordingly, the change in the emotional level for each scene is smaller.

On the other hand, the creator 501 basically performs the work of creating or editing content with concentration while facing the screen of the professional-use monitor 503, and thus, recognition by the creator 501 of created content is not affected by the number of viewers, the position and posture, or distracted viewing. Therefore, the mismatch in the viewing environment such as the number of viewers, the position and posture, or distracted viewing causes a gap between recognition by the creator 501 of created content and recognition by the user 511 of viewed content.

### (4) Physiological Causes (Physiological Mismatch)

Differences in physiological characteristics such as vision, dynamic vision, contrast sensitivity, and flicker sensitivity between the creator 501 and the user 511 also cause a gap between recognition by the creator 501 of created content and recognition by the user 511 of viewed content.

Further, differences in health state and mental state between the creator 501 and the user 511 also cause a gap between recognition by the creator 501 of created content and recognition by the user 511 of viewed content. The creator 501 basically creates or edits content with a certain degree of tension or concentration in a good health state as a profile. On the other hand, the user 511 may view the content in various health states or mental states at home. Therefore, a mismatch in health state or mental state is likely to occur between the creator 501 and the user 511, and a recognition gap with respect to the same content might be caused on the basis of such a mismatch.

### E. Recognition Distance Control Using Artificial Intelligence (1)

The content creation side or supply side wishes to reduce the gap between recognition by the creator 501 of created content and recognition by the user 511 of viewed content, or shorten the recognition distance, so that the user 511 can view the content as intended by the creator 501. Also, many of the users 511 must wish to view the content with the same recognition as the creator 501.

In the television receiving device 100, after decoding of a received stream, the video signal processing unit 105 and/or the audio signal processing unit 106 may perform signal processing so as to shorten the recognition distance by some method.

For example, there is a suggested image display system in which information about the reference white (diffuse white) selected by the creator is transmitted from a source device to a sink device using an MPEG transmission container, and dynamic range conversion is performed at the sink device side so as to reflect the creator's intention on the basis of the reference white (see Patent Document 3). However, there are various causes of a recognition distance, such as a signal mismatch, an environmental mismatch, and a physiological mismatch, and therefore, it is considered difficult to sufficiently shorten the recognition distance only by signal processing that is dynamic range conversion based on the luminance level of the reference white.

With the various causes being taken into consideration, it is difficult to calculate the optimum video signal processing for shortening the recognition distance between the creator and the user frame by frame in real time. Likewise, it is difficult to calculate the optimum audio signal processing in real time.

In view of the above, the video signal processing unit 105 of the technology according to the present disclosure performs video signal processing for shortening the recognition distance between the creator and the user, using an image creation neural network having a pre-learned learning model such as deep learning. At least one of the factors, which are a signal mismatch, an environmental mismatch, and a physiological mismatch, exists between the content creation side and the user, and such a mismatch results in a recognition distance. Note that a signal mismatch means that, when a reproduction signal of a video image, an audio, or the like is expressed by a vector formed with a plurality of components, a vector distance (provisionally also referred to as a "signal distance") between a reproduction signal obtained when content is created on the creator side and a reproduction signal obtained when content is output by the television receiving device 100 is not zero. The correlations among an original video signal (or a decoded video signal), each mismatch factor between the content creation side and the user, and the video signal processing for enabling the user to have the same recognition as the creator are learned beforehand by an image creation neural network through deep learning or the like. Using this image creation neural network, the video signal processing unit 105 then performs video signal processing such as noise reduction, super-resolution processing, a dynamic range conversion process, and gamma processing. As a result, a video image that enables the user to have the same recognition as the creator can be displayed on the image display unit 107.

Also, the audio signal processing unit 106 of the technology according to the present disclosure performs audio signal processing for shortening the recognition distance between the creator and the user, using a sound creation neural network having a learning model that was pre-learned through deep learning or the like. There may be a signal mismatch, an environmental mismatch, or a physiological mismatch between the content creation side and the user (as described above). The correlations among an original audio signal (or a decoded audio signal), each mismatch factor between the content creation side and the user, and the audio signal processing for enabling the user to have the same recognition as the creator are learned beforehand by a sound creation neural network through deep learning or the like. Using this sound creation neural network, the audio signal processing unit 106 then performs audio signal processing including band extension, sound localization, and others. As a result, the audio output unit 108 can output an audio that enables the user to have the same recognition as the creator. Note that a neural network that performs both image creation and sound creation in the signal processing unit 150 can be made to learn the video signal processing and the audio signal processing for eliminating any signal mismatches, environmental mismatches, and physiological mismatches, and minimizing the recognition distance between the user and the creator. Although learning (preliminary learning) of an image creation and sound creation neural network can be performed in the television receiving device 100, it is more preferable to perform the learning using an enormous amount of teaching data in a cloud as described later.

By repeatedly performing learning, a neural network becomes capable of automatically estimating rules of solutions to a problem while changing a coupling weight coefficient between neurons. A learned neural network is indicated as a learning model having an optimum coupling weight coefficient between neurons. A large amount of training data is given to an artificial intelligence formed with a neural network to perform deep learning, and the neural network is trained to provided requested functions. In this manner, it is possible to develop a device including an artificial intelligence that operates according to a trained model. Also, it is possible to develop a device including an artificial intelligence that is capable of solving a complicated problem by extracting features that cannot be imagined by any developer from a large amount of data through training such as deep learning, even if the problem is too complicated for developers to think of an algorithm for a solution.

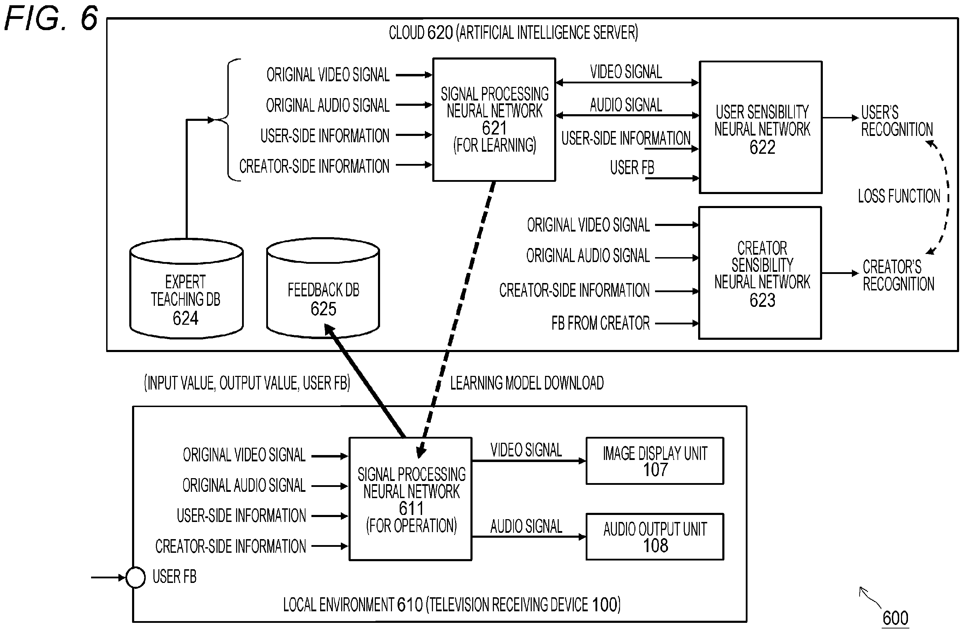

Fig. 6 schematically shows an example configuration of an artificial intelligence system 600 for learning and operating a neural network for shortening a recognition distance between a creator and a user. The artificial intelligence system 600 shown in the drawing is based on the assumption that a cloud is used in the system. The artificial intelligence system 600 that uses a cloud includes a local environment 610 and a cloud 620.

The local environment 610 corresponds to an operation environment (a house) in which the television receiving device 100 is installed, or to the television receiving device 100 installed in a house. Although only one local environment 610 is shown in Fig. 6 for simplification, a huge number of local environments may be connected to one cloud 620 in practice. Further, in the example in this embodiment, an operation environment such as the inside of the house in which the television receiving device 100 operates is mainly described as the local environment 610. However, the local environment 610 may be environments (including public facilities such as stations, bus stops, airports, and shopping centers, and labor facilities such as factories and offices) in which any device including a display that displays content, such as a smartphone, a tablet, or a personal computer, operates.

As described above, the television receiving device 100 includes the video signal processing unit 105 that performs video signal processing such as noise reduction, super-resolution processing, a dynamic range conversion process, and gamma processing using an image creation neural network having a learning model pre-learned through deep learning or the like, and the audio signal processing unit 106 that performs audio signal processing such as band extension and sound localization using a sound creation neural network having a learning model pre-learned through deep learning or the like. In Fig. 6, for the sake of simplicity, the video signal processing unit 105 using an image creation neural network and the audio signal processing unit 106 using a sound creation neural network are collectively referred to as a signal processing neural network 611 that is used in the signal processing unit 150.

Meanwhile, the cloud 620 is equipped with an artificial intelligence server (described above) (including one or more server devices) that provides artificial intelligence. The artificial intelligence server includes a signal processing neural network 621, a user sensibility neural network 622 that learns the user's sensibility, a creator sensibility neural network 623 that learns the creator's sensibility, an expert teaching database 624, and a feedback database 625.

The expert teaching database 624 stores an enormous amount of sample data related to video signals and audio signals, user-side information, and creator-side information. Here, the user-side information includes the user's state, profile, and physiological information, information about the environment in which the television receiving device 100 being used by the user is installed, characteristics information about the hardware or the like of the television receiving device 100 being used by the user, and signal information about signal processing such as the decoding applied to received video and audio signals in the television receiving device 100. Note that the profile of the user may include past environment information such as the history of the user posting and browsing on an SNS (the images uploaded onto or viewed on the SNS). It is assumed that almost all the user-side information can be acquired by the sensor unit 109 provided in the television receiving device 100. Meanwhile, the creator-side information is information on the creator side corresponding to the user-side information described above, and includes the creator's state and profile, characteristics information about the hardware or the like related to the professional-use monitor and the authoring system being used by the creator, and signal information related to signal processing such as the encoding applied when video signals and audio signals created by the creator are uploaded onto a transmission medium or a recording medium. It is assumed that the creator-side information can be acquired by a sensor function that is equivalent to the sensor unit 109 and is provided in the content creation environment.

The signal processing neural network 621 has the same configuration as the signal processing neural network 611 provided in the local environment 610, and includes an image creation neural network and a sound creation neural network, or is one neural network in which an image creation neural network and a sound creation neural network are integrated. The signal processing neural network 621 is for learning (including continuous learning), and is provided in the cloud 620. On the other hand, the signal processing neural network 611 of the local environment 610 is designed on the basis of results of learning performed by the signal processing neural network 621, and is incorporated, for operation purposes, into the signal processing unit 150 (or into the respective signal processing units of the video signal processing unit 105 and the audio signal processing unit 106) in the television receiving device 100.

Using the expert teaching database 624 installed in the cloud 620, the signal processing neural network 621 on the side of the cloud 620 learns the correlations an original video signal (or a decoded video signal), an original audio signal (or a decoded audio signal), the user-side information and the creator-side information, and the video signal processing and the audio signal processing for enabling the user to have the same recognition as the creator with respect to the content. Note that the user-side information may include past environment information such as the history of the user posting and browsing on an SNS (the images uploaded onto or viewed on the SNS). The signal processing neural network 621 then receives a video signal, an audio signal, the user-side information, and the creator-side information as inputs, and estimates the video signal processing and the audio signal processing for enabling the user to have the same recognition as the creator with respect to the content. Thus, the signal processing neural network 621 outputs the video signal and the audio signal obtained by performing the estimated video signal processing and audio signal processing on the input video signal and audio signal, respectively.

The user sensibility neural network 622 and the creator sensibility neural network 623 are neural networks to be used for evaluating the learning status of the signal processing neural network 621.

The user sensibility neural network 622 is a neural network that learns the user's sensibility, and learns the correlations among a video signal and an audio signal, the user-side information, and the user's recognition with respect to the video and audio output. In the artificial intelligence system 600 shown in Fig. 6, the user sensibility neural network 622 receives outputs from the signal processing neural network 621 (a video signal and an audio signal on which signal processing has been performed so that the user and the creator have the same recognition with respect to the content) and the user-side information as inputs, and estimates and outputs the user's recognition with respect to the input video signal and audio signal.

Meanwhile, the creator sensibility neural network 623 is a neural network that learns the creator's sensibility, and learns the correlations among a video signal and an audio signal, the creator-side information, and the creator's recognition with respect to the video and audio output. In the artificial intelligence system 600 shown in Fig. 6, the creator sensibility neural network 623 receives an original video signal and an original audio signal (that are input to the signal processing neural network 621), and the creator-side information as inputs, and estimates and outputs the creator's recognition with respect to the input video signal and audio signal.

For example, a loss function based on the difference between the user's recognition estimated by the user sensibility neural network 622 and the creator's recognition estimated by the creator sensibility neural network 623 is defined. The signal processing neural network 621 then performs learning through back propagation (a back propagation method) so as to minimize the loss function.

On the side of the local environment 610, the signal processing neural network 611 receives the video signal and audio signal being received or reproduced by the television receiving device 100, the user-side information, and the creator-side information as inputs, estimates the video signal processing and the audio signal processing that enable the user to have the same recognition as the creator on the basis of the results of the learning performed by the signal processing neural network 621 on the side of the cloud 620, and outputs the video signal and the audio signal obtained by performing the estimated video signal processing and audio signal processing on the input video signal and audio signal, respectively. Note that it is difficult for the television receiving device 100 to acquire the creator-side information in real time. Therefore, creator-side information set as default or general creator-side information may be set as fixed input values to be input to the signal processing neural network 611. Alternatively, the creator-side information may be acquired as metadata accompanying the content to be reproduced by the television receiving device 100. Specifically, the creator-side information may be distributed together with the content via a broadcast signal or an online distribution video signal, or may be recorded together with the content in a recording medium and be distributed. Also, during broadcast or online distribution, the content and the creator-side information may be distributed in a common stream, or may be distributed in different streams. The video signal and the audio signal that are output from the signal processing neural network 611 are then displayed on the image display unit 107 and output as an audio from the audio output unit 108, respectively. Here, for the sake of simplicity, the inputs to the signal processing neural network 611 are also referred to as the "input values", and the outputs from the signal processing neural network 611 are also referred to simply as the "output values".

A user (a viewer of the television receiving device 100, for example) of the local environment 610 evaluates the output values of the signal processing neural network 611, and feeds back the user's recognition of the video and audio outputs from the television receiving device 100 via a remote controller of the television receiving device 100, an audio agent, a cooperating smartphone, or the like, for example. The feedback may be generated on the basis of an operation in which the user sets information about settings such as image and sound quality settings, for example. The input values and the output values, and the feedback (user FB) from the user in the local environment 610 are transferred to the cloud 620, and are stored into the expert teaching database 624 and the feedback database 625, respectively.

In the cloud 620, learning by the user sensibility neural network 622 and the creator sensibility neural network 623 for evaluation as a first step, and learning by the signal processing neural network 621 as a second step are alternately conducted. In the first step, the signal processing neural network 621 is fixed (learning is stopped), and learning is performed by the user sensibility neural network 622 and the creator sensibility neural network 623. In the second step, on the other hand, the user sensibility neural network 622 and the creator sensibility neural network 623 are fixed (learning is stopped), and learning is performed by the signal processing neural network 621.

The user sensibility neural network 622 is a neural network that learns the user's sensibility. In the first step, the user sensibility neural network 622 receives inputs of a video signal and an audio signal output from the signal processing neural network 621, and the same user-side information as an input to the signal processing neural network 621, and estimates and outputs the user's recognition of the video signal and the audio signal subjected to signal processing. A loss function based on the difference between the user's recognition estimated by the user sensibility neural network 622 with respect to the video signal and the audio signal output from the signal processing neural network 621, and the actual user's recognition read from the feedback database 625 is then defined, and learning is performed by the user sensibility neural network 622 through back propagation (a back propagation method) so as to minimize the loss function. As a result, the video signal and audio signal subjected to the signal processing by the signal processing neural network 621 to cause the user and the creator have the same recognition is learned by the user sensibility neural network 622 so that the user's recognition estimated by the user sensibility neural network 622 approaches the actual user's recognition.

The creator sensibility neural network 623 is a neural network that learns the creator's sensibility. In the first step, the creator sensibility neural network 623 receives inputs of an original video signal and an original audio signal, and the creator-side information that are the same as the inputs to the signal processing neural network 621, and estimates and outputs the creator's recognition of the original video signal and the original audio signal. A loss function based on the difference between the creator's recognition estimated by the creator sensibility neural network 623 with respect to the original video signal and the original audio signal, and the actual creator's recognition read from the feedback database 625 is then defined, and learning is performed by the creator sensibility neural network 623 through back propagation (a back propagation method) so as to minimize the loss function. As a result, the creator sensibility neural network 623 learns the original video signal and the original audio signal (which are the content created by the creator) so that the creator's recognition estimated by the creator sensibility neural network 623 approaches the actual creator's recognition.

In the second step that follows, both the user sensibility neural network 622 and the creator sensibility neural network 623 are fixed, and learning is performed by the signal processing neural network 621 this time. When feedback data is extracted from the feedback database 625 (described above), the input values included in the feedback data are input to the signal processing neural network 621. The signal processing neural network 621 estimates the video signal processing and the audio signal processing for enabling the user to have the same recognition as the creator with respect to the input values, and outputs the video signal and the audio signal obtained by performing the estimated video signal processing and audio signal processing on the input video signal and audio signal, respectively.

The user sensibility neural network 622 then receives inputs of the video signal and the audio signal output from the signal processing neural network 621, and the user-side information, and estimates and outputs the user's recognition of the input video signal and audio signal. The creator sensibility neural network 623 also receives the inputs values read from the feedback database 625 (the same original video signal and original audio signal as the inputs to the signal processing neural network 621), and estimates and outputs the creator's recognition.

For example, a loss function based on the difference between the user's recognition estimated by the user sensibility neural network 622 and the creator's recognition estimated by the creator sensibility neural network 623 is defined. The signal processing neural network 621 then performs learning through back propagation (a back propagation method) so as to minimize the loss function.

Also, the expert teaching database 624 may be used as teaching data when learning is performed by the signal processing neural network 621. Further, learning may be performed using two or more sets of teaching data, such as the feedback database 625 and the expert teaching database 624. In this case, the loss function calculated for each set of teaching data may be weighted, and learning may be performed by the signal processing neural network 621 so as to minimize the loss function.

As the learning by the user sensibility neural network 622 and the creator sensibility neural network 623 as the first step, and the learning by the signal processing neural network 621 as the second step are alternately conducted as described above, the accuracy with which the video signal and the audio signal output from the signal processing neural network 621 shorten the recognition distance between the user and the creator becomes higher. Further, a learning model including a set of optimum coupling weight coefficients between neurons in the signal processing neural network 621 whose accuracy has been improved by learning is downloaded into the television receiving device 100 in the local environment 610, and the inter-neuron coupling weight coefficient for the signal processing neural network 611 is set, so that the user (or the television receiving device 100 being used by the user) can also use the further-learned signal processing neural network 611. As a result, the user's recognition of the video and audio outputs from the television receiving device 100 more frequently matches the creator's recognition at the time of the content creation.

Any appropriate method may be adopted as the method for providing the local environment 610 with the learning model having its accuracy increased through learning on the side of the cloud 620. For example, a bitstream of the learning model of the signal processing neural network 621 may be compressed and downloaded from the cloud 620 into the television receiving device 100 in the local environment 610. When the size of the bitstream is large even after compression, the learning model may be divided into a plurality of pieces, and the compressed bitstream may be downloaded a plurality of times. A learning model is a set of coupling weight coefficients between neurons in a neural network, and may be divided for the respective layers in the neural network or for the respective regions in the layers when divided and downloaded.

As the signal processing neural network 611 that has learned on the basis of the artificial intelligence system 600 shown in Fig. 6 is adopted and used in the television receiving device 100, it is possible to achieve matching in terms of signal 551, environment and physiological matching 552, and matching in terms of signal 553 (see Fig. 5) between the user and the creator, and to shorten the recognition distance between the user and the creator.

The inputs to the signal processing neural network (NN) 611, and the outputs of the user sensibility neural network 622 and the creator sensibility neural network 623 are summarized in Table 1 shown below. The same applies to the signal processing neural network 621. The inputs to the signal processing neural network 621 can basically use sensor information provided by the sensor unit 109 installed in the television receiving device 100. However, information from some other device may or course be used.

**[Table 1]**

| | | | |
|---|---|---|---|
| NN input | Signal | - Video signal/audio signal | |
| | | - Information from decoding unit, quality | |
| | | - Subtitles/- QP value/- Motion vector | |
| | | - Content type (movie, sport, or like) | |
| | Display device | Liquid crystal | Viewing angle, response, and temperature characteristics |
| | | LED | Response and temperature characteristics for each color |
| | Environment information | Ambient lighting, natural light (intensity/angle/color) | |
| | | Reflection on screen (intensity/angle/color) | |
| | | Number of viewers/listeners, position and posture (distance/angle) | |
| | | Wearing of eyeglasses | |
| | | Smartphone usage | |
| | Physiological information | Likes and tastes | |
| | | Vision, dynamic vision | |
| | | Contrast sensitivity | |
| | | Flicker sensitivity | |
| NN output | Recognition and sensibility | Philosophy (verbalized) | |
| | | Biological information (non-verbal) | |
| | | Noticeability | |

Next, the frequency of relearning by the signal processing neural network 621 (or 611) is described.

Physiological information such as the user's vision, dynamic vision, contrast sensitivity, and flicker sensitivity, and the user's likes and tastes change over time. Therefore, relearning of inputs relating to these items is preferably performed by the signal processing neural network 621 at a predetermined frequency over a long period of time.

Further, a reproduction device such as the television receiving device 100 being used by the user deteriorates over time, and the reproduction environment at an edge and a connection status with a fog or a cloud gradually change. Therefore, relearning of inputs relating to the reproduction device and the reproduction environment is preferably performed by the signal processing neural network 621 in an intermediate period of time.

Meanwhile, communication environments for the television receiving device 100 can be classified into several patterns in accordance with the types of communication media (or the bandwidths of media) that may be used. Viewing environments include ambient lighting and natural light (intensity/angle/color), reflection on the screen (intensity/angle/color), presence/absence of eyeglasses (the optical characteristics of the lenses in a case where eyeglasses are worn), and the usage status of a smartphone (whether or not the user performing viewing while operating the smartphone), and combinations of these items can be classified into several patterns. Therefore, a predetermined number of combination patterns of communication environments and viewing environments may be defined in advance, and a learning model for each pattern may be generated in an intermediate period of time. The communication environment and the viewing environment may change in a short period of time on the user side. However, every time a change occurs, a learning model may be adaptively used. The learning model may be one suitable for a combination pattern of the communication environment and the viewing environment at that time, or one suitable for an approximate combination pattern of the communication environment and the viewing environment.

### F. Signal Distance Control Using Artificial Intelligence

In addition to the method for shortening the recognition distance between the user and the creator by video signal processing and audio signal processing using an artificial intelligence as described in the above chapter E, it is also possible to perform processing for minimizing the signal distance between the user and the creator by video signal processing and audio signal processing using an artificial intelligence. In this chapter, control on the signal distance between the user and the creator using an artificial intelligence is described.

Between content at the time of creation by the creator and the content being viewed by the user, there is a signal distance due to at least one of the following factors: a signal mismatch, an environmental mismatch, and a physiological mismatch. A signal mismatch, an environmental mismatch, and a physiological mismatch have been described in detail with reference to Fig. 5. The signal distance control to be described in this chapter aims to minimize the signal distance to be caused by at least one of these factors: a signal mismatch, an environmental mismatch, and a physiological mismatch.

Further, in a case where a plurality of users is using the television receiving device 100, there also is a recognition distance between the users, and therefore, it is difficult to control the recognition distance between the users and the creator. This is because it is unclear that the recognition distance between which user among the plurality of users and the creator should be controlled, and, if the recognition distance between one user and the creator is controlled, there is a possibility that the recognition distances between the other users and the creator will become longer. In such a case, it can be said that the signal distance control to be described in this chapter is preferable to the recognition distance control described in the above chapter E.

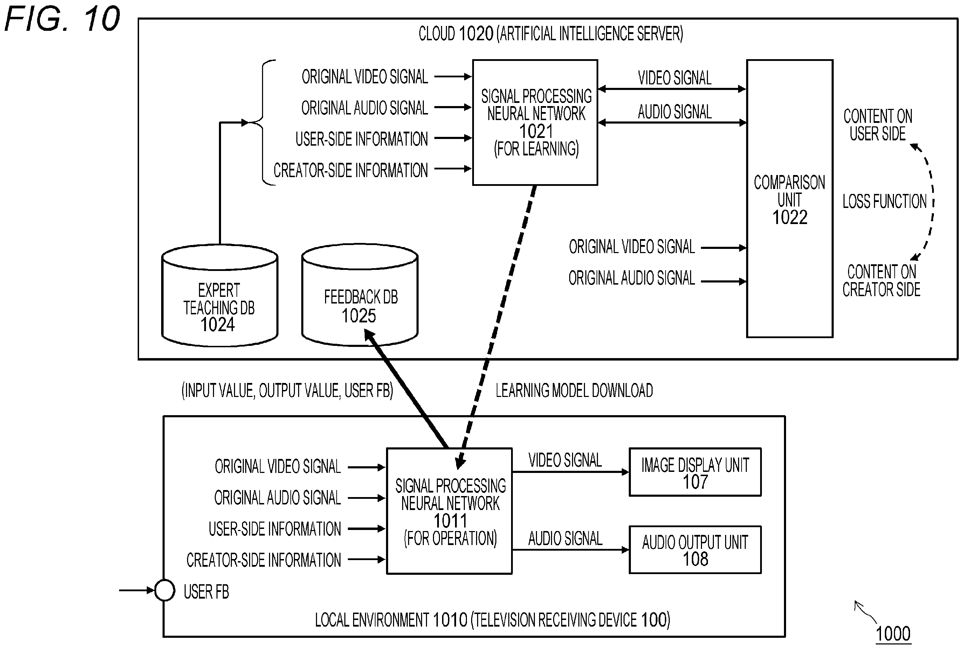

Fig. 10 schematically shows an example configuration of an artificial intelligence system 1000 for learning and operating a neural network for shortening a signal distance between a creator and a user. The artificial intelligence system 1000 shown in the drawing is based on the assumption that a cloud is used in the system. The artificial intelligence system 1000 that uses a cloud includes a local environment 1010 and a cloud 1020.

The local environment 1010 corresponds to an operation environment (a house) in which the television receiving device 100 is installed, or to the television receiving device 100 installed in a house. Although only one local environment 1010 is shown in Fig. 10 for simplification, a huge number of local environments may be connected to one cloud 1020 in practice. Further, in the example in this embodiment, an operation environment such as the inside of the house in which the television receiving device 100 operates is mainly described as the local environment 1010. However, the local environment 1010 may be environments (including public facilities such as stations, bus stops, airports, and shopping centers, and labor facilities such as factories and offices) in which any device including a display that displays content, such as a smartphone, a tablet, or a personal computer, operates.

As described above, the television receiving device 100 includes the video signal processing unit 105 that performs video signal processing such as noise reduction, super-resolution processing, a dynamic range conversion process, and gamma processing using an image creation neural network having a learning model pre-learned through deep learning or the like, and the audio signal processing unit 106 that performs audio signal processing such as band extension and sound localization using a sound creation neural network having a learning model pre-learned through deep learning or the like. In Fig. 10, for the sake of simplicity, the video signal processing unit 105 using an image creation neural network and the audio signal processing unit 106 using a sound creation neural network are collectively referred to as a signal processing neural network 1011 that is used in the signal processing unit 150.

Meanwhile, the cloud 1020 is equipped with an artificial intelligence server (described above) (including one or more server devices) that provides artificial intelligence. The artificial intelligence server includes a signal processing neural network 1021, a comparison unit 1022 that compares an output of the signal processing neural network 1021 with teaching data, an expert teaching database 1024, and a feedback database 1025.

The expert teaching database 1024 stores an enormous amount of sample data related to video signals and audio signals, user-side information, and creator-side information. Here, the user-side information includes the user's state, profile, and physiological information, information about the environment in which the television receiving device 100 being used by the user is installed, characteristics information about the hardware or the like of the television receiving device 100 being used by the user, and signal information about signal processing such as the decoding applied to received video and audio signals in the television receiving device 100. Note that the profile of the user may include past environment information such as the history of the user posting and browsing on an SNS (the images uploaded onto or viewed on the SNS). It is assumed that almost all the user-side information can be acquired by the sensor unit 109 provided in the television receiving device 100. Meanwhile, the creator-side information is information on the creator side corresponding to the user-side information described above, and includes the creator's state and profile, characteristics information about the hardware or the like related to the professional-use monitor and the authoring system being used by the creator, and signal information related to signal processing such as the encoding applied when video signals and audio signals created by the creator are uploaded onto a transmission medium or a recording medium. It is assumed that the creator-side information can be acquired by a sensor function that is equivalent to the sensor unit 109 and is provided in the content creation environment.

The signal processing neural network 1021 has the same configuration as the signal processing neural network 1011 provided in the local environment 1010, and includes an image creation neural network and a sound creation neural network, or is one neural network in which an image creation neural network and a sound creation neural network are integrated. The signal processing neural network 1021 is for learning (including continuous learning), and is provided in the cloud 1020. On the other hand, the signal processing neural network 1011 of the local environment 1010 is designed on the basis of results of learning performed by the signal processing neural network 1021, and is incorporated, for operation purposes, into the signal processing unit 150 (or into the respective signal processing units of the video signal processing unit 105 and the audio signal processing unit 106) in the television receiving device 100.

Using the expert teaching database 1024 installed in the cloud 1020, the signal processing neural network 1021 on the side of the cloud 1020 learns the correlations among an original video signal (or a decoded video signal), an original audio signal (or a decoded audio signal), the user-side information and the creator-side information, and the video signal processing and the audio signal processing to be performed so that the signal of the content to be received and reproduced by the television receiving device 100 becomes a signal similar to the original content created by the creator, or for minimizing the signal distance. Note that the user-side information may include past environment information such as the history of the user posting and browsing on an SNS (the images uploaded onto or viewed on the SNS). The signal processing neural network 1021 then receives a video signal, an audio signal, the user-side information, and the creator-side information as inputs, estimates the video signal processing and the audio signal processing for minimizing the signal distance between the user and the creator, and outputs the video signal and the audio signal obtained by performing the estimated video signal processing and audio signal processing on the input video signal and audio signal, respectively.

On the side of the local environment 1010, the signal processing neural network 1011 receives the video signal and audio signal being received or reproduced by the television receiving device 100, the user-side information, and the creator-side information as inputs, estimates the video signal processing and the audio signal processing for minimizing the signal distance between the user and the creator on the basis of the results of the learning performed by the signal processing neural network 1021 on the side of the cloud 1020, and outputs the video signal and the audio signal obtained by performing the estimated video signal processing and audio signal processing on the input video signal and audio signal, respectively. Note that it is difficult for the television receiving device 100 to acquire the creator-side information in real time. Therefore, creator-side information set as default or general creator-side information may be set as fixed input values to be input to the signal processing neural network 1011. Alternatively, the creator-side information may be acquired as metadata accompanying the content to be reproduced by the television receiving device 100. Specifically, the creator-side information may be distributed together with the content via a broadcast signal or an online distribution video signal, or may be recorded together with the content in a recording medium and be distributed. Also, during broadcast or online distribution, the content and the creator-side information may be distributed in a common stream, or may be distributed in different streams. The video signal and the audio signal that are output from the signal processing neural network 1011 are then displayed on the image display unit 107 and output as an audio from the audio output unit 108, respectively. Here, for the sake of simplicity, the inputs to the signal processing neural network 1011 are also referred to as the "input values", and the outputs from the signal processing neural network 1011 are also referred to simply as the "output values".

A user (a viewer of the television receiving device 100, for example) of the local environment 1010 evaluates the output values of the signal processing neural network 1011, and feeds back the user's recognition of the video and audio outputs from the television receiving device 100 via a remote controller of the television receiving device 100, an audio agent, a cooperating smartphone, or the like, for example. The feedback may be generated on the basis of an operation in which the user sets information about settings such as image and sound quality settings, for example. The input values and the output values, and the feedback (user FB) from the user in the local environment 1010 are transferred to the cloud 1020, and are stored into the expert teaching database 1024 and the feedback database 1025, respectively.

The comparison unit 1022 compares the video signal and the audio signal output from the signal processing neural network 1021 with the teaching data, which is the same original video signal and original audio signal as those input to the signal processing neural network 1021. For example, a loss function based on the differences between the video signal and the audio signal output from the signal processing neural network 1021, and the original video signal and the original audio signal is defined. Alternatively, a loss function may be defined, with a feedback from the user being further taken into consideration. The comparison unit 1022 then conducts learning by the signal processing neural network 1021 through back propagation (a back propagation method), so as to minimize the loss function.

In a content reproducing device such as the television receiving device 100, it is possible to apply, to the content to be reproduced, an image quality enhancement process such as noise reduction, super-resolution processing, a dynamic range conversion process, and gamma processing, and a sound quality enhancement process such as band extension. At that time, the signal processing neural network 1021 on the side of the cloud 1020 can be made to learn beforehand the video and audio signal processing to be performed so that the data of content received by the television receiving device 100 becomes a signal similar to the original content created by the creator. The results of the learning are then set in the signal processing neural network 1011 of the local environment 1010, so that signal processing for minimizing the signal distance between the content on the user side and the content on the creator side is performed in the television receiving device 100.

Further, information about the environment in which the television receiving device 100 is installed may be acquired through the sensor unit 109, and, on the basis of those pieces of information, the signal processing neural network 1011 may perform video and audio signal processing so as to reduce the differences between the audio and video signals of the content to be delivered from the television receiving device 100 to the user, and the audio and video signals of the content to be delivered from the reproduction device on the creator side to the creator. For example, information such as the size of the room in which the television receiving device 100 is placed, the position of the user, and the brightness of the room is acquired, and signal processing can be performed so that the audio and video image of the content are viewed as intended by the creator, on the basis of the corresponding information acquired on the creator side. Further, on the basis of information regarding the physical features and the viewing state of the user, processing may be performed so that the differences between the viewing content on the user side and the viewing content on the creator side becomes smaller. In this case, information such as the height of the user, the presence or absence of eyeglasses, the viewing hour, and the movement of the user's line of sight is acquired, for example, and signal processing can be performed so that the user can view the content as intended by the creator.

By comparing the output of the signal processing neural network 1022 with the signal of the content acquired on the creator side, the comparison unit 1022 learns the video signal processing and the audio signal processing for minimizing the signal distance between the user and the creator, to counter any signal mismatches, environmental mismatches, and physiological mismatches. On the basis of the learning results generated by the signal processing neural network 1022, the signal processing neural network 1011 then performs signal processing in the television receiving device 100. Such processing is used in a situation where it is difficult to perform recognition distance control, such as a situation where a plurality of users is using the television receiving device 100, for example. However, in a case where recognition distance control is possible, the signal processing neural network 1021 may perform learning further using a user sensibility neural network and a creator sensibility neural network as described above in the chapter E.

### G. Recognition Distance Control Using Artificial Intelligence (2)

In addition to the method for shortening the recognition distance between the user and the creator by video signal processing and audio signal processing using an artificial intelligence as described in the above chapter E, it is also possible to adopt a method for further shortening the recognition distance between the user and the creator, using a scene-producing effect of a sensory type.

It is assumed that recognition by the user changes when a stimulus is given to the user. For example, in a scene where the creator wishes to generate a sense of fear at the time of content creation, the creator creates a scene-producing effect by sending cold air or blowing water droplets to cause a sense of fear in the user, and thus, contributes to further shortening the recognition distance between the user and the creator.

An effect producing technique of a sensory type is also called "4D", which is already introduced in some movie theaters and the like, and stimulates the senses of the audience, using movement of seats in vertical, horizontal, and backward and forward directions, wind (cold air or warm air), light (switching on and off of lightings or the like), water (mist or splashes), scent, smoke, physical movement, and the like in conjunction with scenes being shown. On the other hand, this embodiment is to use a device (hereinafter also referred to as an "effect producing device") that stimulates the five senses of a user viewing the content being reproduced on the television receiving device 100. Examples of effect producing devices include an air conditioner, an electric fan, a heater, a lighting device (a ceiling light, a room light, a table lamp, or the like), a mist sprayer, a scent machine, and a smoke generator. Further, an autonomous device such as a wearable device, a handy device, an IoT device, an ultrasonic array speaker, or a drone can be used as an effect producing device. A wearable device mentioned herein may be a device of a bracelet type, a pendant type, or the like.

An effect producing device may use a home appliance already installed in the room where the television receiving device 100 is installed, or may be a dedicated device for giving a stimulus to the user. Also, an effect producing device may be either an external device externally connected to the television receiving device 100, or an internal device disposed in the housing of the television receiving device 100. An effect producing device provided as an external device is connected to the television receiving device 100 via a home network, for example.

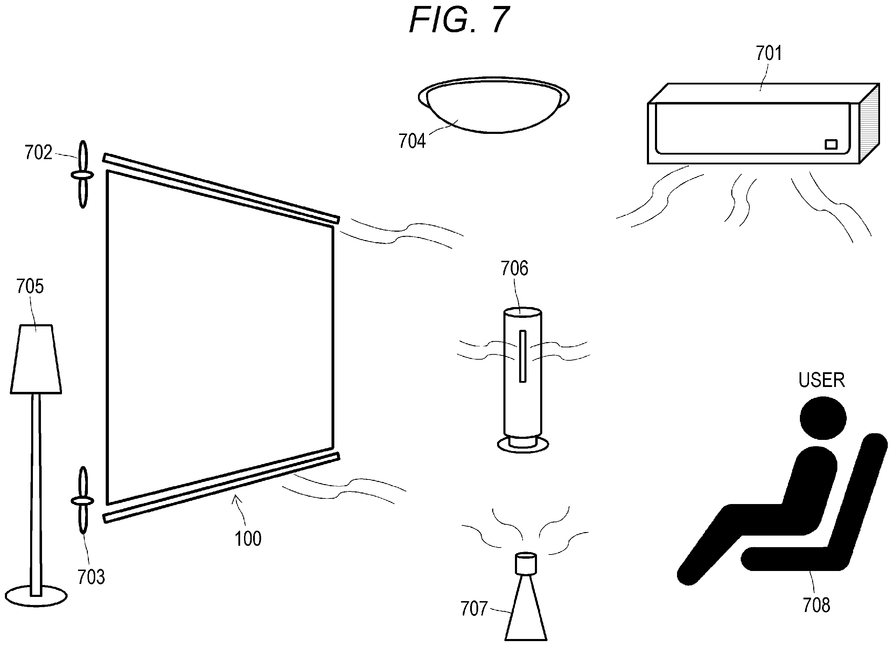

Fig. 7 shows an example of installation of effect producing devices in the room in which the television receiving device 100 is installed. In the example shown in the drawing, the user is sitting in a chair so as to face the screen of the television receiving device 100.

In the room in which the television receiving device 100 is installed, an air conditioner 701, fans 702 and 703 disposed in the television receiving device 100, an electric fan (not illustrated), a heater (not illustrated), and the like are installed as effect producing devices that use wind. In the example shown in Fig. 7, the fans 702 and 703 are disposed in the housing of the television receiving device 100 so as to blow air from the upper edge and the lower edge, respectively, of the large screen of the television receiving device 100. Also, the air conditioner 701, the fans 702 and 703, and the heater (not shown) can also operate as effect producing devices that use temperature. It is assumed that the user's recognition changes when the wind speed, the wind volume, the wind pressure, the wind direction, the fluctuation, the air blow temperature, or the like of the fans 702 and 703 is adjusted.

Also, lighting devices such as a ceiling light 704, a room light 705, and a table lamp (not shown) disposed in the room in which the television receiving device 100 is installed can be used as effect producing devices that use light. It is assumed that the user's recognition changes when the light quantity of each lighting device, the light quantity for each wavelength, the direction of light beams, or the like is adjusted.

Further, a mist sprayer 706 that emits mist or splashes water and is disposed in the room in which the television receiving device 100 is installed can be used as an effect producing device that uses water. It is assumed that the user's recognition changes when the spray amount, the spray direction, the particle size, the temperature, or the like of the mist sprayer 706 is adjusted.

Also, in the room in which the television receiving device 100 is installed, a scent machine (a diffuser) 707 that efficiently generates a desired scent in the room through air diffusion or the like is disposed as an effect producing device that uses a scent. It is assumed that the user's recognition changes when the type, the concentration, the duration, or the like of the scent released from the scent machine 707 is adjusted.

Further, in the room in which television receiving device 100 is installed, a smoke generator (not shown) that generates smoke into the air is disposed as an effect producing device that uses smoke. A typical smoke generator instantly ejects liquefied carbon dioxide into the air to generate white smoke. It is assumed that the user's recognition changes when the amount of smoke generated by the smoke generator, the concentration of smoke, the ejection time, the color of smoke, or the like is adjusted.

Furthermore, a chair 708 that is disposed in front of the screen of the television receiving device 100, and in which the user is sitting can generate physical movement such as a moving action in vertical, horizontal, and backward and forward directions, and a vibrating action, and is used as an effect producing device that use movement. For example, a massage chair may be used as an effect producing device of this kind. Further, as the chair 708 is in close contact with the seated user, it is possible to achieve a scene-producing effect by giving the user an electrical stimulus that is not hazardous to the user's health, or stimulating the user's cutaneous (haptic) sense or tactile sense.

The example of installation of effect producing devices shown in Fig. 7 is merely an example. In addition to those shown in the drawing, autonomous devices such as a wearable device, a handy device, an IoT device, an ultrasonic array speaker, and a drone can be used as effect producing devices. A wearable device mentioned herein may be a device of a bracelet type, a pendant type, or the like.

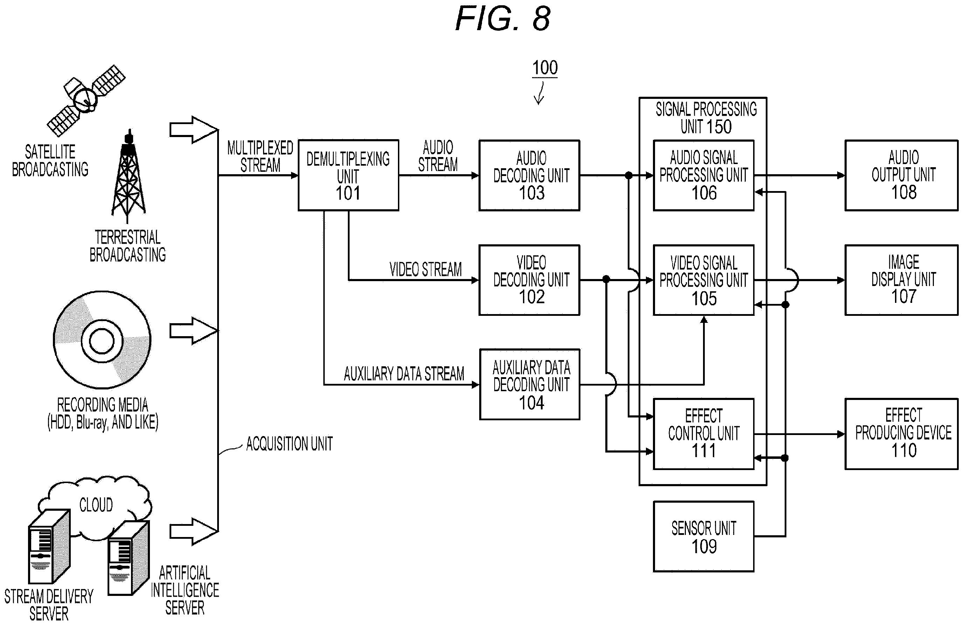

Fig. 8 shows an example configuration of the television receiving device 100 using scene-producing effects. In Fig. 8, however, the same components as those of the television receiving device 100 shown in Fig. 2 are denoted by the same reference numerals as those shown in Fig. 2, and explanation of these common components will not be repeated below.

The television receiving device 100 shown in Fig. 8 further includes an effect producing device 110, and an effect control unit 111 that controls drive of the effect producing device 110.

As described above with reference to Fig. 7, the effect producing device 110 includes at least one of various effect producing devices that use wind, temperature, light, water (mist or splash), scent, smoke, physical movement, and the like. The effect producing device 110 is driven on the basis of a control signal output from the effect control unit 111 for each scene of the content (or in synchronization with a video image or audio). For example, in a case where the effect producing device 110 is an effect producing device that uses wind, the wind speed, the wind volume, the wind pressure, the wind direction, the fluctuation, the air blow temperature, and the like are adjusted on the basis of the control signal output from the effect control unit 111.

In the example shown in Fig. 8, the effect control unit 111 is a component in the signal processing unit 150, like the video signal processing unit 105 and the audio signal processing unit 106. The effect control unit 111 receives inputs of a video signal, an audio signal, and sensor information output from the sensor unit 109, and outputs the control signal for controlling the drive of the effect producing device 110 so as to obtain a scene-producing effect of a sensory type suitable for each scene of the video image and audio. In the example shown in Fig. 8, a video signal and an audio signal after decoding are input to the effect control device 111. However, a video signal and an audio signal before decoding may be input to the effect control device 111.

In this embodiment, it is assumed that the effect control unit 111 controls drive of the effect producing device 110, using an effect control neural network having a pre-learned learning model such as deep learning. Specifically, the effect control neural network is made to learn beforehand the correlations among an original video signal (or a decoded video signal), each mismatch factor between the content creation side and the user, and the scene-producing effect (or a control signal to the effect producing device 110) for enabling the user to have the same recognition as the creator. The effect control unit 111 then drives the effect producing device 110 by using this effect control neural network, to stimulate the five senses of the user. As a result, a scene-producing effect that enables the user to have the same recognition as the creator can be achieved. Note that a neural network that performs image creation, sound creation, and effect control in parallel in the signal processing unit 150 can be made to learn the video signal processing, the audio signal processing, and the effect control for eliminating any signal mismatches, environmental mismatches, and physiological mismatches, and minimizing the recognition distance between the user and the creator. Although learning (preliminary learning) of an effect control neural network can be performed in the television receiving device 100, it is more preferable to perform the learning using an enormous amount of teaching data in a cloud as described later.

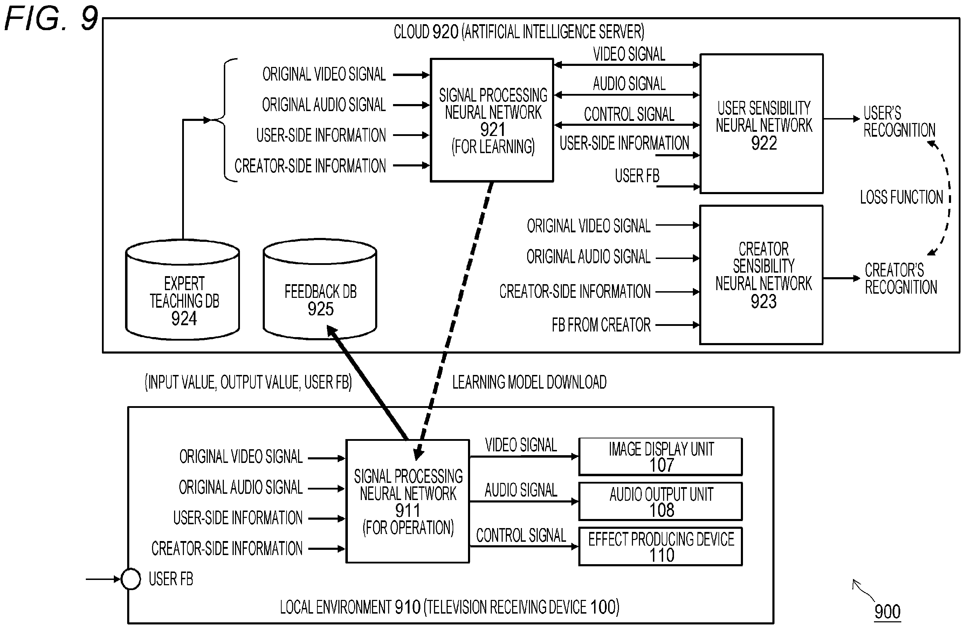

Fig. 9 schematically shows an example configuration of an artificial intelligence system 900 for learning and operating a neural network for shortening a recognition distance between a creator and a user, further using a scene-producing effect. The artificial intelligence system 900 shown in the drawing is based on the assumption that a cloud is used in the system. The artificial intelligence system 900 that uses a cloud includes a local environment 910 and a cloud 920.

The local environment 910 corresponds to an operation environment (a house) in which the television receiving device 100 is installed, or to the television receiving device 100 installed in a house. Although only one local environment 910 is shown in Fig. 6 for simplification, a huge number of local environments may be connected to one cloud 920 in practice. Further, in the example in this embodiment, an operation environment such as the inside of the house in which the television receiving device 100 operates is mainly described as the local environment 910. However, the local environment 910 may be environments (including public facilities such as stations, bus stops, airports, and shopping centers, and labor facilities such as factories and offices) in which any device including a display that displays content, such as a smartphone, a tablet, or a personal computer, operates.

In addition to the video signal processing unit 105 that performs video signal processing such as noise reduction, super-resolution processing, a dynamic range conversion process, and gamma processing using an image creation neural network having a learning model pre-learned through deep learning or the like, and the audio signal processing unit 106 that performs audio signal processing such as band extension and sound localization using a sound creation neural network having a learning model pre-learned through deep learning or the like, the television receiving device 100 shown in Fig. 8 includes the effect control unit 111 that achieves a scene-producing effect by outputting a control signal to the effect producing device 110, using an effect control neural network having a learning model pre-learned through deep learning or the like. In Fig. 9, for the sake of simplicity, the video signal processing unit 105 using an image creation neural network, the audio signal processing unit 106 using a sound creation neural network, and the effect control unit 111 using an effect control neural network are collectively referred to as a signal processing neural network 911 that is used in the signal processing unit 150.

Meanwhile, the cloud 920 is equipped with an artificial intelligence server (described above) (including one or more server devices) that provides artificial intelligence. The artificial intelligence server includes a signal processing neural network 921, a user sensibility neural network 922 that learns the user's sensibility, a creator sensibility neural network 923 that learns the creator's sensibility, an expert teaching database 924, and a feedback database 925.

The expert teaching database 924 stores an enormous amount of sample data related to video signals and audio signals, user-side information, and creator-side information. The user-side information and the creator-side information are as described above. It is assumed that the user-side information can be acquired by the sensor unit 109 provided in the television receiving device 100. Note that the profile of the user may include past environment information such as the history of the user posting and browsing on an SNS (the images uploaded onto or viewed on the SNS). It is also assumed that the creator-side information can be acquired by a sensor function that is equivalent to the sensor unit 109 and is provided in the content creation environment.

The signal processing neural network 921 has the same configuration as the signal processing neural network 911 provided in the local environment 910, and includes an image creation neural network, a sound creation neural network, and an effect control neural network, or is one neural network in which an image creation neural network, a sound creation neural network, and an effect control neural network are integrated. The signal processing neural network 921 is for learning (including continuous learning), and is provided in the cloud 920. On the other hand, the signal processing neural network 911 of the local environment 910 is designed on the basis of results of learning performed by the signal processing neural network 921, and is incorporated, for operation purposes, into the signal processing unit 150 (or into the respective signal processing units of the video signal processing unit 105, the audio signal processing unit 106, and the effect control unit 111) in the television receiving device 100.

Using the expert teaching database 924 installed in the cloud 920, the signal processing neural network 921 on the side of the cloud 920 learns the correlations among an original video signal (or a decoded video signal), an original audio signal (or a decoded audio signal), the user-side information and the creator-side information, and the video signal processing, the audio signal processing, and the scene-producing effect (or a control signal to the effect producing device 110) for enabling the user to have the same recognition as the creator with respect to the content. Note that the user-side information may include past environment information such as the history of the user posting and browsing on an SNS (the images uploaded onto or viewed on the SNS). The signal processing neural network 921 then receives a video signal, an audio signal, the user-side information, and the creator-side information as inputs, and estimates the video signal processing, the audio signal processing, and the scene-producing effect (or a control signal to the effect producing device 110) for enabling the user to have the same recognition as the creator with respect to the content. Thus, the signal processing neural network 921 outputs the video signal and the audio signal obtained by performing the estimated video signal processing and audio signal processing on the input video signal and audio signal, respectively, and the control signal to the effect producing device 110.

The user sensibility neural network 922 and the creator sensibility neural network 923 are neural networks to be used for evaluating the learning status of the signal processing neural network 921.

The user sensibility neural network 922 is a neural network that learns the user's sensibility, and learns the correlations among a video signal and an audio signal, a scene-producing effect (or a control signal to the effect producing device 110), the user-side information, and the user's recognition with respect to the video and audio output. In the artificial intelligence system 900 shown in Fig. 9, the user sensibility neural network 922 receives outputs from the signal processing neural network 921 (a video signal and an audio signal on which signal processing has been performed so that the user and the creator have the same recognition with respect to the content, and the scene-producing effect (the control signal to the effect producing device 110) estimated so that the recognition of the content is the same between the user and the creator) and the user-side information as inputs, and estimates and outputs the user's recognition with respect to the input video signal, audio signal, and scene-producing effect.

Meanwhile, the creator sensibility neural network 923 is a neural network that learns the creator's sensibility, and learns the correlations among a video signal and an audio signal, the creator-side information, and the creator's recognition with respect to the video and audio output. In the artificial intelligence system 900 shown in Fig. 9, the creator sensibility neural network 923 receives an original video signal and an original audio signal (that are input to the signal processing neural network 921), and the creator-side information as inputs, and estimates and outputs the creator's recognition with respect to the input video signal and audio signal.

For example, a loss function based on the difference between the user's recognition estimated by the user sensibility neural network 922 and the creator's recognition estimated by the creator sensibility neural network 923 is defined. The signal processing neural network 921 then performs learning through back propagation (a back propagation method) so as to minimize the loss function.

On the side of the local environment 910, the signal processing neural network 911 receives the video signal and audio signal being received or reproduced by the television receiving device 100, the user-side information, and the creator-side information as inputs, estimates the video signal processing, the audio signal processing, and the scene-producing effect that enable the user to have the same recognition as the creator on the basis of the results of the learning performed by the signal processing neural network 921 on the side of the cloud 920, and outputs the video signal and the audio signal obtained by performing the estimated video signal processing and audio signal processing on the input video signal and audio signal, respectively, and the control signal to the effect producing device 110. Note that it is difficult for the television receiving device 100 to acquire the creator-side information in real time. Therefore, creator-side information set as default or general creator-side information may be set as fixed input values to be input to the signal processing neural network 911. Alternatively, the creator-side information may be acquired as metadata accompanying the content to be reproduced by the television receiving device 100. Specifically, the creator-side information may be distributed together with the content via a broadcast signal or an online distribution video signal, or may be recorded together with the content in a recording medium and be distributed. Also, during broadcast or online distribution, the content and the creator-side information may be distributed in a common stream, or may be distributed in different streams. The video signal and the audio signal that are output from the signal processing neural network 911 are then displayed on the image display unit 107 and output as an audio from the audio output unit 108, respectively. Here, for the sake of simplicity, the inputs to the signal processing neural network 911 are also referred to as the "input values", and the outputs from the signal processing neural network 911 are also referred to simply as the "output values".

A user (a viewer of the television receiving device 100, for example) of the local environment 910 evaluates the output values of the signal processing neural network 911, and feeds back the user's recognition of the video and audio outputs from the television receiving device 100 via a remote controller of the television receiving device 100, an audio agent, a cooperating smartphone, or the like, for example. The feedback may be generated on the basis of an operation in which the user sets information about settings such as image and sound quality settings, for example. The input values and the output values, and the feedback (user FB) from the user in the local environment 910 are transferred to the cloud 920, and are stored into the expert teaching database 924 and the feedback database 925, respectively.

In the cloud 920, learning by the user sensibility neural network 922 and the creator sensibility neural network 923 for evaluation as a first step, and learning by the signal processing neural network 921 as a second step are alternately conducted. In the first step, the signal processing neural network 921 is fixed (learning is stopped), and learning is performed by the user sensibility neural network 922 and the creator sensibility neural network 923. In the second step, on the other hand, the user sensibility neural network 922 and the creator sensibility neural network 923 are fixed (learning is stopped), and learning is performed by the signal processing neural network 921.

The user sensibility neural network 922 is a neural network that learns the user's sensibility. In the first step, the user sensibility neural network 922 receives inputs of a video signal, an audio signal, and a scene-producing effect (a control signal to the effect producing device 110) that are output from the signal processing neural network 921, and the same user-side information as an input to the signal processing neural network 921, and estimates and outputs the user's recognition of the video signal and the audio signal subjected to signal processing, and the scene-producing effect (the control signal to the effect producing device 110). A loss function based on the difference between the user's recognition estimated by the user sensibility neural network 922 with respect to the video signal and the audio signal, and the scene-producing effect (the control signal to the effect producing device 110) that are output from the signal processing neural network 921, and the actual user's recognition read from the feedback database 925 is then defined, and learning is performed by the user sensibility neural network 922 so as to minimize the loss function. As a result, the video signal and audio signal, and the scene-producing effect (the control signal to the effect producing device 110) that have been subjected to the signal processing by the signal processing neural network 921 to cause the user and the creator have the same recognition is learned by the user sensibility neural network 922 so that the user's recognition estimated by the user sensibility neural network 922 approaches the actual user's recognition.

The creator sensibility neural network 923 is a neural network that learns the creator's sensibility. In the first step, the creator sensibility neural network 923 receives inputs of an original video signal and an original audio signal, and the creator-side information that are the same as the inputs to the signal processing neural network 921, and estimates and outputs the creator's recognition of the original video signal and the original audio signal. A loss function based on the difference between the creator's recognition estimated by the creator sensibility neural network 923 with respect to the original video signal and the original audio signal, and the actual creator's recognition read from the feedback database 925 is then defined, and learning is performed by the creator sensibility neural network 923 so as to minimize the loss function. As a result, the creator sensibility neural network 923 learns the original video signal and the original audio signal (which are the content created by the creator) so that the creator's recognition estimated by the creator sensibility neural network 923 approaches the actual creator's recognition.

In the second step that follows, both the user sensibility neural network 922 and the creator sensibility neural network 923 are fixed, and learning is performed by the signal processing neural network 921 this time. When feedback data is extracted from the feedback database 925 (described above), the input values included in the feedback data are input to the signal processing neural network 921. The signal processing neural network 921 estimates the video signal processing, the audio signal processing, and the scene-producing effect for enabling the user to have the same recognition as the creator with respect to the input values, and outputs the video signal and the audio signal obtained by performing the estimated video signal processing and audio signal processing on the input video signal and audio signal, respectively, and the control signal to the effect producing device 110.

The user sensibility neural network 922 then receives inputs of the video signal and the audio signal output from the signal processing neural network 921, and the user-side information, and estimates and outputs the user's recognition of the input video signal and audio signal, and the scene-producing effect (the control signal to the effect producing device 110). The creator sensibility neural network 923 also receives the inputs values read from the feedback database 925 (the same original video signal and original audio signal as the inputs to the signal processing neural network 921), and estimates and outputs the creator's recognition.

For example, a loss function based on the difference between the user's recognition estimated by the user sensibility neural network 922 and the creator's recognition estimated by the creator sensibility neural network 923 is defined. The signal processing neural network 921 then performs learning through back propagation (a back propagation method) so as to minimize the loss function.

Also, the expert teaching database 924 may be used as teaching data when learning is performed by the signal processing neural network 921. Further, learning may be performed using two or more sets of teaching data, such as the feedback database 925 and the expert teaching database 924. In this case, the loss function calculated for each set of teaching data may be weighted, and learning may be performed by the signal processing neural network 921 so as to minimize the loss function.

As the learning by the user sensibility neural network 922 and the creator sensibility neural network 923 as the first step, and the learning by the signal processing neural network 921 as the second step are alternately conducted as described above, the accuracy with which the video signal and the audio signal output from the signal processing neural network 921 shorten the recognition distance between the user and the creator becomes higher. Further, a learning model including a set of optimum coupling weight coefficients between neurons in the signal processing neural network 921 whose accuracy has been improved by learning is downloaded into the television receiving device 100 in the local environment 910, and the inter-neuron coupling weight coefficient for the signal processing neural network 911 is set, so that the user (or the television receiving device 100 being used by the user) can also use the further-learned signal processing neural network 911. As a result, the user's recognition of the video and audio outputs from the television receiving device 100 more frequently matches the creator's recognition at the time of the content creation.

Any appropriate method may be adopted as the method for providing the local environment 910 with the learning model having its accuracy increased through learning on the side of the cloud 920. For example, a bitstream of the learning model of the signal processing neural network 921 may be compressed and downloaded from the cloud 920 into the television receiving device 100 in the local environment 910. When the size of the bitstream is large even after compression, the learning model may be divided into a plurality of pieces, and the compressed bitstream may be downloaded a plurality of times. A learning model is a set of coupling weight coefficients between neurons in a neural network, and may be divided for the respective layers in the neural network or for the respective regions in the layers when divided and downloaded.

### H. Signal Distance Control Between Users, Using Artificial Intelligence

In the above chapter E, a method for shortening a recognition distance between a user and a creator by video signal processing and audio signal processing using an artificial intelligence has been explained. As a modification thereof, it is also possible to perform processing for minimizing a signal distance between users by video signal processing and audio signal processing using an artificial intelligence. In this chapter, control on a signal distance between users using an artificial intelligence is described.

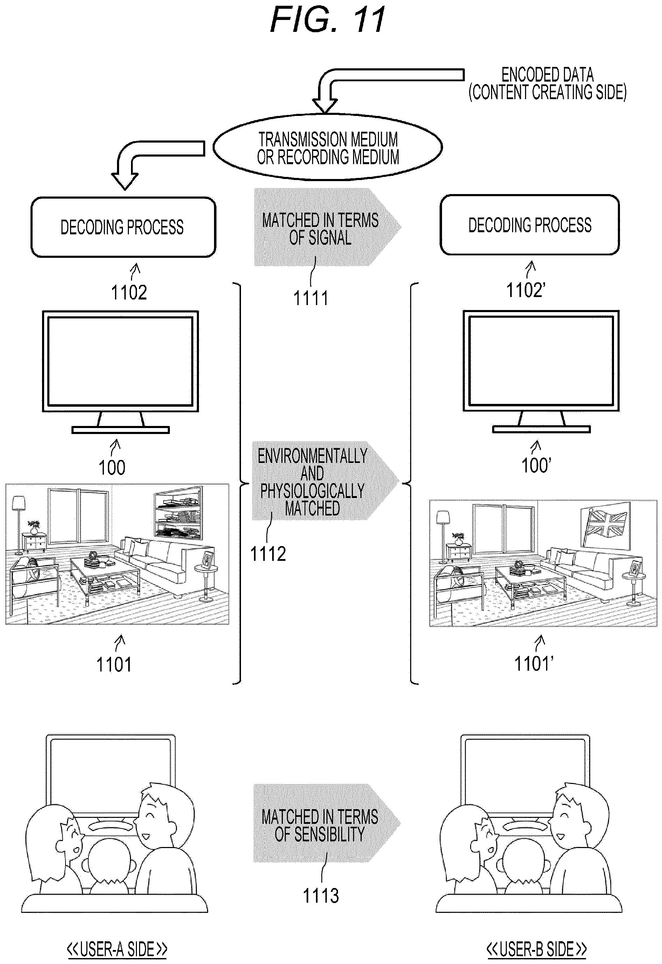

Fig. 11 schematically shows a flow before content created on the content creation side is viewed by each user (a user A and a user B in the example shown in Fig. 11) in the system as illustrated in Fig. 1. In Fig. 11, the left side is the side of the user A, and the right side is the side of the user B.

The content created or edited by the creator on the content creation side is subjected to an encoding process (not shown in Fig. 11) by a predetermined coding method such as MPEG, for example, and is then delivered to each user via a transmission medium such as broadcast or the Internet, or via a recording medium such as Blu-ray.

On the side of the user A, the television receiving device 100 or some other content reproducing device (hereinafter referred to simply as the "television receiving device 100") receives the encoded data via a transmission medium or a recording medium. The television receiving device 100 is installed in a living room 1101 or the like of the home of the user A, for example. In the television receiving device 100, a decoding process 1102 according to the predetermined coding method such as MPEG is performed on the received encoded data, to separate the encoded data into a video stream and an audio stream. After further signal processing is performed, the video image is displayed on the screen, and the audio is output. The user A then views the video image and listens to the audio from the television receiving device 100.

On the side of the user B, a television receiving device 100' or some other content reproducing device (hereinafter referred to simply as the "television receiving device 100'") also receives encoded data via a transmission medium or a recording medium. The television receiving device 100' is installed in a living room 1101' or the like of the home of the user B, for example. In the television receiving device 100', a decoding process 1102' according to the predetermined coding method such as MPEG is performed on the received encoded data, to separate the encoded data into a video stream and an audio stream. After further signal processing is performed, the video image is displayed on the screen, and the audio is output. The user B then views the video image and listens to the audio from the television receiving device 100'.

A gap, or a signal distance, is generated between the signal of the content reproduced by the television receiving device 100 on the side of user A and the signal of the content reproduced by the television receiving device 100' on the side of user B. Possible causes of a signal distance may be those listed below.

### (1) Causes Due to Signal Processing (Signal Mismatch)

Noise occurs when a RAW signal handled on the content creation side is transmitted to each user, and a signal mismatch occurs due to processing such as color sampling and gradation conversion in the course of the decoding process performed by each of the television receiving device 100 and the television receiving device 100'. Further, in the course of the signal processing such as image quality enhancement and sound quality enhancement performed in each of the television receiving device 100 and the television receiving device 100', a mismatch occurs in the signal of the content to be reproduced.

### (2) Causes Due to Hardware Characteristics (Environmental Mismatch (1))

The user A and the user B view content on commercially available television receiving devices 100 and 100', respectively. When the television receiving device 100 and the television receiving device 100' are different in manufacturer, model, or the like, there is a hardware mismatch such as a performance difference and a characteristic difference. Therefore, even if the same video signal and the same audio signal are input, a mismatch occurs between the respective signals of the content reproduced by the television receiving device 100 and television receiving device 100'. For example, in a case where the display device is liquid crystal, a difference is caused in the video image due to differences in viewing angle characteristics, response characteristics, and temperature characteristics. Further, in a case where the display device is an LED, a difference is caused in the video image due to differences in response characteristics and temperature characteristics for each color.

Note that the performance information and the characteristics information about each television receiving device can be acquired from information about the specifications of the respective products. Also, the performance difference and the characteristics difference between the respective television receiving devices may be the results of analysis of video signals and audio signals output from the respective devices, the analysis using a luminance meter or a spectrum analysis device.

### (3) Causes Due to Environment (Environmental Mismatch (2))

The user A views reproduction content on the television receiving device 100 installed in the living room 1101 or the like at home. Likewise, the user B views reproduction content on the television receiving device 100' installed in the living room 1101' or the like at home. Between the living room 1101 and the living room 1101', sound insulating properties are different, and indoor lighting and natural light have different intensities, different irradiation angles, and different colors. Further, the intensity, the reflection angle, and the color of light reflected on the screen are different between the television receiving device 100 and the television receiving device 100'. Such environmental mismatches cause mismatches between the respective signals of the content reproduced by the television receiving device 100 and the television receiving device 100'.

### (4) Physiological Causes (Physiological Mismatch)

Due to differences in physiological characteristics such as vision, dynamic vision, contrast sensitivity, and flicker sensitivity between the user A and the user B, even if the user A and the user B view the same reproduction content, a mismatch occurs in the signal recognized in the brain. Likewise, due to differences in the health state or the mental state between the user A and the user B, a mismatch occurs in the signal recognized in the grain when the user A and the user B view the same reproduction content.

Note that, in addition to a signal distance, a recognition distance caused by a signal mismatch, an environmental mismatch, a physiological mismatch, or the like may of course exist between the user A and the user B. However, while the recognition by the creator who is an expert and the creator of the content can be an absolute reference, it is unclear which of the recognitions by the user A and the user B is the reference, and it is difficult to set a reference from among users. Therefore, the objective in this chapter is to minimize the signal distance to be caused by at least one of these factors: a signal mismatch, an environmental mismatch, and a physiological mismatch.

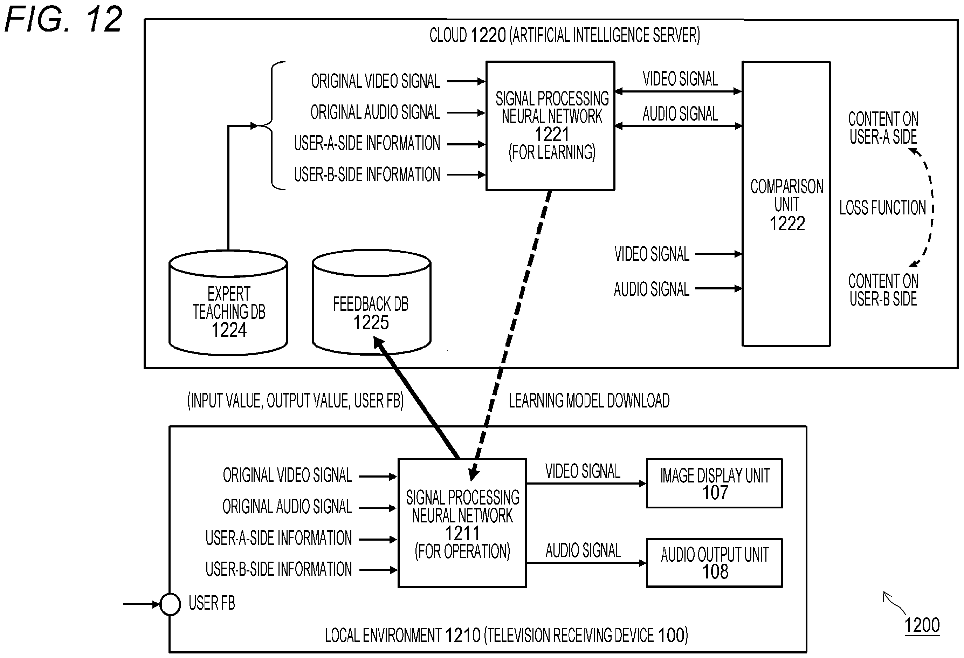

Fig. 12 schematically shows an example configuration of an artificial intelligence system 1200 for learning and operating a neural network for shortening a signal distance between users. The artificial intelligence system 1200 shown in the drawing is based on the assumption that a cloud is used in the system. The artificial intelligence system 1200 that uses a cloud includes a local environment 1210 and a cloud 1220.

The local environment 1210 corresponds to an operation environment (a house) in which the television receiving device 100 is installed, or to the television receiving device 100 installed in a house. Although only one local environment 1210 is shown in Fig. 12 for simplification, a huge number of local environments may be connected to one cloud 1220 in practice. Further, in the example in this embodiment, an operation environment such as the inside of the house in which the television receiving device 100 operates is mainly described as the local environment 1210. However, the local environment 1210 may be environments (including public facilities such as stations, bus stops, airports, and shopping centers, and labor facilities such as factories and offices) in which any device including a display that displays content, such as a smartphone, a tablet, or a personal computer, operates.

As described above, the television receiving device 100 includes the video signal processing unit 105 that performs video signal processing such as noise reduction, super-resolution processing, a dynamic range conversion process, and gamma processing using an image creation neural network having a learning model pre-learned through deep learning or the like, and the audio signal processing unit 106 that performs audio signal processing such as band extension and sound localization using a sound creation neural network having a learning model pre-learned through deep learning or the like. In Fig. 12, for the sake of simplicity, the video signal processing unit 105 using an image creation neural network and the audio signal processing unit 106 using a sound creation neural network are collectively referred to as a signal processing neural network 1211 that is used in the signal processing unit 150.

Meanwhile, the cloud 1220 is equipped with an artificial intelligence server (described above) (including one or more server devices) that provides artificial intelligence. The artificial intelligence server includes a signal processing neural network 1221, a comparison unit 1222 that compares an output of the signal processing neural network 1221 with teaching data, an expert teaching database 1224, and a feedback database 1225.

The expert teaching database 1224 stores an enormous amount of sample data related to video signals and audio signals, and user-side information. Here, the user-side information includes the user's state, profile, and physiological information, information about the environment in which the television receiving device 100 being used by the user is installed, characteristics information about the hardware or the like of the television receiving device 100 being used by the user, and signal information about signal processing such as the decoding applied to received video and audio signals in the television receiving device 100. Note that the profile of the user may include past environment information such as the history of the user posting and browsing on an SNS (the images uploaded onto or viewed on the SNS). It is assumed that almost all the user-side information can be acquired by the sensor unit 109 provided in the television receiving device 100.

The signal processing neural network 1221 has the same configuration as the signal processing neural network 1211 provided in the local environment 1210, and includes an image creation neural network and a sound creation neural network, or is one neural network in which an image creation neural network and a sound creation neural network are integrated. The signal processing neural network 1221 is for learning (including continuous learning), and is provided in the cloud 1220. On the other hand, the signal processing neural network 1211 of the local environment 1210 is designed on the basis of results of learning performed by the signal processing neural network 1221, and is incorporated, for operation purposes, into the signal processing unit 150 (or into the respective signal processing units of the video signal processing unit 105 and the audio signal processing unit 106) in the television receiving device 100.

Using the expert teaching database 1224 installed in the cloud 1220, the signal processing neural network 1221 on the side of the cloud 1220 learns the correlations among an original video signal (or a decoded video signal), an original audio signal (or a decoded audio signal), a plurality of sets of user-side information ("user-A-side information" and "user-B-side information" in Fig. 12), and the video signal processing and the audio signal processing for minimizing the signal distance between the content to be performed on the television receiving devices 100 of the respective users (the user A and the user B in the example shown in Fig. 12). Note that the user-side information may include past environment information such as the history of the user posting and browsing on an SNS (the images uploaded onto or viewed on the SNS). Further, in the example shown in Fig. 12, the video signal and the audio signal reproduced by the television receiving device 100 on the side of the user B are used as the teaching data. However, some other signals may be used as the teaching data. For example, the video signal and the audio signal of original content transmitted from the content creation side, or a standard video signal and a standard audio signal to be viewed at home may be defined as teaching data for learning by the signal processing neural network 1221. The signal processing neural network 1221 then receives a video signal, an audio signal, and a plurality of sets of user-side information as inputs, estimates the video signal processing and the audio signal processing for minimizing the signal distance between users, and outputs the video signal and the audio signal obtained by performing the estimated video signal processing and audio signal processing on the input video signal and audio signal, respectively.

By comparing the output of the signal processing neural network 1221 with the signal of reference content (original content, for example), the comparison unit 1222 learns the video signal processing and the audio signal processing for minimizing the signal distance between users, to counter any signal mismatches, environmental mismatches, and physiological mismatches.

Specifically, the comparison unit 1222 compares a video signal and an audio signal output from the signal processing neural network 1221 (the video signal and the audio signal estimated for the user A in the example shown in Fig. 12) with the teaching data (the video signal and the audio signal to be reproduced by the television receiving device 100 on the side of the user B in the example shown in Fig. 12). For example, a loss function based on the differences between the video signal and the audio signal output from the signal processing neural network 1221, and the original video signal and the original audio signal is defined. Alternatively, a loss function may be defined, with a feedback from the user being further taken into consideration. The comparison unit 1222 then conducts learning by the signal processing neural network 1221 through back propagation (a back propagation method), so as to minimize the loss function.

On the side of the local environment 1210, the television receiving device 100 causes the signal processing neural network 1211 to perform signal processing on a video signal and an audio signal, on the basis of the learning results generated by the signal processing neural network 1222 on the side of the cloud 1220. Specifically, on the side of the local environment 1210, the signal processing neural network 1211 receives the video signal and audio signal being received or reproduced by the television receiving device 100, and a plurality of sets of user-side information (the "user-A-side information" as information about the user and the "user-B-side information" as information about the other user in Fig. 12) as inputs, estimates the video signal processing and the audio signal processing for minimizing the signal distance between the users on the basis of the results of the learning performed by the signal processing neural network 1221 on the side of the cloud 1220, and outputs the video signal and the audio signal obtained by performing the estimated video signal processing and audio signal processing on the input video signal and audio signal, respectively. Note that it is difficult for the television receiving device 100 to acquire the other user-side information (the "user-B-side information" in Fig. 12) in real time. Therefore, user-side information set as default or general user-side information may be set as fixed input values to be input to the signal processing neural network 1211. Alternatively, the other user-side information may be acquired as metadata accompanying the content to be reproduced by the television receiving device 100. Specifically, the other user-side information may be distributed together with the content via a broadcast signal or an online distribution video signal, or may be recorded together with the content in a recording medium and be distributed. Also, during broadcast or online distribution, the content and the other user-side information may be distributed in a common stream, or may be distributed in different streams. The video signal and the audio signal that are output from the signal processing neural network 1211 are then displayed on the image display unit 107 and output as an audio from the audio output unit, respectively. Here, for the sake of simplicity, the inputs to the signal processing neural network 1211 are also referred to as the "input values", and the outputs from the signal processing neural network 1211 are also referred to simply as the "output values".

A user (a viewer of the television receiving device 100, for example) of the local environment 1210 evaluates the output values of the signal processing neural network 1211, and feeds back the user's recognition of the video and audio outputs from the television receiving device 100 via a remote controller of the television receiving device 100, an audio agent, a cooperating smartphone, or the like, for example. The feedback may be generated on the basis of an operation in which the user sets information about settings such as image and sound quality settings, for example. The input values and the output values, and the feedback (user FB) from the user in the local environment 1210 are transferred to the cloud 1220, and are stored into the expert teaching database 1224 and the feedback database 1225, respectively.

In a content reproducing device such as the television receiving device 100, it is possible to apply, to the content to be reproduced, an image quality enhancement process such as noise reduction, super-resolution processing, a dynamic range conversion process, and gamma processing, and a sound quality enhancement process such as band extension. At that time, the signal processing neural network 1221 on the side of the cloud 1220 can be made to learn beforehand the video and audio signal processing to be performed so that the data of content received by the television receiving device 100 becomes a signal similar to the content to be reproduced by the television receiving device 100' of the other user. The results of the learning are then set in the signal processing neural network 1211 of the local environment 1210, signal processing for minimizing the content signal distance between the users is performed in the television receiving device 100.

Further, information about the environment in which the television receiving device 100 is installed may be acquired through the sensor unit 109, and, on the basis of those pieces of information, the signal processing neural network 1211 may perform video and audio signal processing so as to reduce the differences between the audio and video signals of the content to be delivered from the television receiving device 100 to the user, and the audio and video signals of the content to be delivered from the television receiving device 100' to the other user. For example, information such as the size of the room in which the television receiving device 100 is placed, the position of the user, and the brightness of the room is acquired, and signal processing can be performed so that the same audio and video image of the content are viewed by each user, on the basis of the corresponding information acquired on the side of the other user. Further, on the basis of information regarding the physical features and the viewing state of each user, processing may be performed so that the differences in the viewing content between the users. In this case, information such as the height of each user, the presence or absence of eyeglasses, the viewing hours, and the movement of each user's line of sight is acquired, for example, and signal processing can be performed so that each user can view the same content.

As the signal processing neural network 1211 that has learned on the basis of the artificial intelligence system 1200 shown in Fig. 12 is adopted and used in the television receiving device 100, it is possible to achieve matching in terms of signal 1111, environment and physiological matching 1112, and matching in terms of signal 113 (see Fig. 11) between the users, and to shorten the signal distance between any users.

### INDUSTRIAL APPLICABILITY

The technology according to the present disclosure has been described in detail, with reference to specific embodiments. However, it is obvious that those skilled in the art can make modifications to and substitutions of the embodiments without departing from the scope of the technology according to the present disclosure.

In this specification, embodiments in which the technology according to the present disclosure is applied to a television receiver have been mainly described. However, the subject matter of the technology according to the present disclosure is not limited to these embodiments. The technology according to the present disclosure can also be applied to a content acquiring device, a reproduction device, or a display device that is equipped with a display having a function to acquire or reproduce various kinds of content to be presented to the user by acquiring various kinds of reproduction content such as video and audio by streaming or downloading via broadcast waves or the Internet.

In short, the technology according to the present disclosure has been described through examples, and the descriptions in this specification should not be interpreted in a restrictive manner. The claims should be taken into account in understanding the subject matter of the technology according to the present disclosure.

Note that the technology disclosed in the present specification may also be embodied in the configurations described below.

(1) An information processing device including:
   an acquisition unit that acquires reproduction content;
   a detection unit that acquires information regarding a viewing status;
   a control unit that estimates reproduction content to be output, on the basis of information regarding a user who views the reproduction content and information regarding a creator who has created the reproduction content; and
   an output unit that outputs the estimated reproduction content.
(2) The information processing device according to (1), in which
   the information regarding the user includes information regarding at least one of a state of the user, a profile of the user, an installation environment of the information processing device, hardware information about the information processing device, and signal processing to be performed in the information processing device.
(3) The information processing device according to (1) or (2), in which
   the information regarding the user includes information detected by the detection unit.
(4) The information processing device according to any one of (1) to (3), in which
   the information regarding the creator includes information regarding at least one of a state of the creator, a profile of the creator, a creation environment of the content, hardware information about a device used in creation of the content, and signal processing to be performed when the content is uploaded.
(5) The information processing device according to any one of (1) to (4), in which
   the information regarding the creator includes information corresponding to the information regarding the user.
(6) The information processing device according to any one of (1) to (5), in which
   the control unit estimates signal processing for the reproduction content as control for estimating the reproduction content to be output.
(7) The information processing device according to (6), in which
   the signal processing for the reproduction content is a process of associating a video image or sound of the reproduction content recognized by the user with a video image or sound of the reproduction content recognized by the creator.
(8) The information processing device according to (6) or (7), in which
   the reproduction content includes a video signal, and
   the signal processing includes at least one of resolution conversion, dynamic range conversion, noise reduction, and gamma processing.
(9) The information processing device according to any one of (6) to (8), in which
   the reproduction content includes an audio signal, and
   the signal processing includes at least one of band extension and sound localization.
(10) The information processing device according to any one of (6) to (9), in which
   the control unit acquires feedback about the reproduction content output on the basis of the signal processing, and further performs the signal processing on the basis of the feedback.
(11) The information processing device according to (6), in which
   the acquisition unit further acquires reference information about the signal processing, the reference information being generated on the basis of the information regarding the user and the information regarding the creator, and
   the control unit estimates the signal processing on the basis of the reference information.
(12) The information processing device according to (11), in which
   the control unit performs estimation of the signal processing on the basis of the reference information by performing a process using artificial intelligence.
(13) The information processing device according to (12), in which
   the process using artificial intelligence is a process of performing the estimation on the basis of information detected by the detection unit and the reference information.
(14) The information processing device according to (1) to (13), in which
   the control unit controls an external device so as to output a scene-producing effect corresponding to the reproduction content.
(15) The information processing device according to (14), in which
   the external device is an effect producing device that outputs a scene-producing effect, and
   the control unit controls the effect producing device on the basis of the information regarding the user and the information regarding the creator detected by the detection unit.
(16) The information processing device according to (15), in which
   the effect producing device includes an effect producing device that uses at least one of wind, temperature, water, light, scent, smoke, and physical movement.
(17) The information processing device according to any one of (14) to (16), in which
   the acquisition unit further acquires reference information about a control process of the effect producing device, the reference information being generated on the basis of the information regarding the user and the information regarding the creator, and
   the control unit estimates processing for controlling the external device on the basis of the reference information, by performing a process using artificial intelligence.
(18) An information processing method including:
   an acquisition step of acquiring reproduction content;
   a detection step of acquiring information regarding a viewing status;
   a control step of estimating reproduction content to be output, on the basis of information regarding a user who views the reproduction content and information regarding a creator who has created the reproduction content; and
   an output step of outputting the estimated reproduction content.
(19) An artificial intelligence system including:
   a first neural network that learns correlations among reproduction content, information regarding a user who views the reproduction content, and information regarding a creator who has created the reproduction content;
   a second neural network that learns correlations among the reproduction content, information regarding the user, and recognition by the user of the reproduction content; and
   a third neural network that learns correlations among the reproduction content, information regarding the creator, and recognition by the creator of the reproduction content.
(20) The artificial intelligence system according to (19), in which,
   in a first step, learning by the first neural network is stopped, learning by the second neural network is conducted to minimize a loss function that is defined on the basis of a difference between estimated recognition by the user of the reproduction content and actual recognition by the user, the estimated recognition having been estimated by the second neural network, and learning by the third neural network is conducted to minimize a loss function that is defined on the basis of a difference between estimated recognition by the creator of the reproduction content and actual recognition by the creator, the estimated recognition by the creator having been estimated by the third neural network, and,
   in a second step, learning by the second neural network and the third neural network is stopped, and learning by the first neural network is conducted to minimize a loss function that is defined on the basis of a difference between estimated recognition by the user of the reproduction content and estimated recognition of the creator of the reproduction content, the estimated recognition by the user having been estimated by the first neural network on the basis of the reproduction content, the information regarding the user who views the reproduction content, and the information regarding the creator that has created the reproduction content, the estimated recognition by the creator having been estimated by the third neural network.
(21) A display device equipped with an artificial intelligence,
   the display device including:
   an input unit that receives an input of reproduction content;
   a detection unit that acquires information regarding a viewing status;
   a control unit that estimates reproduction content to be output, on the basis of information regarding a user who views the reproduction content and information regarding a creator who has created the reproduction content; and
   a display unit that displays the estimated reproduction content.

### REFERENCE SIGNS LIST

- 100: Television receiving device
- 101: Demultiplexing unit
- 102: Video decoding unit
- 103: Audio decoding unit
- 104: Auxiliary data decoding unit
- 105: Video signal processing unit
- 106: Audio signal processing unit
- 107: Image display unit
- 108: Audio output unit
- 109: Sensor unit
- 110: Effect producing device
- 111: Effect control unit
- 150: Signal processing unit
- 300: Display
- 301: Speaker unit
- 301-1, 301-2: Vibration exciter
- 302: Stand
- 410: Camera unit
- 411 to 413: Camera
- 420: User state sensor unit
- 430: Environment sensor unit
- 440: Device state sensor unit
- 450: User profile sensor unit
- 600: Artificial intelligence system
- 610: Local environment
- 611: Signal processing neural network
- 620: Cloud
- 621: Signal processing neural network
- 622: User sensibility neural network
- 623: Creator sensibility neural network
- 624: Expert teaching database
- 625: User feedback database
- 701: Air conditioner
- 702, 703: Fan
- 704: Ceiling light
- 705: Room light
- 706: Mist sprayer
- 707: Scent machine
- 708: Chair
- 900: Artificial intelligence system
- 910: Local environment
- 911: Signal processing neural network
- 920: Cloud
- 921: Signal processing neural network
- 922: User sensibility neural network
- 923: Creator sensibility neural network
- 924: Expert teaching database
- 925: User feedback database
- 1000: Artificial intelligence system
- 1010: Local environment
- 1011: Signal processing neural network
- 1020: Cloud
- 1021: Signal processing neural network
- 1022: Comparison unit
- 1024: Expert teaching database
- 1025: User feedback database
- 1200: Artificial intelligence system
- 1210: Local environment
- 1211: Signal processing neural network
- 1220: Cloud
- 1221: Signal processing neural network
- 1222: Comparison unit
- 1224: Expert teaching database
- 1225: User feedback database

## Claims

1. An information processing device comprising:
an acquisition unit that acquires reproduction content;
a detection unit that acquires information regarding a viewing status;
a control unit that estimates reproduction content to be output, on a basis of information regarding a user who views the reproduction content and information regarding a creator who has created the reproduction content; and
an output unit that outputs the estimated reproduction content.

2. The information processing device according to claim 1, wherein
the information regarding the user includes information regarding at least one of a state of the user, a profile of the user, an installation environment of the information processing device, hardware information about the information processing device, and signal processing to be performed in the information processing device.

3. The information processing device according to claim 1, wherein
the information regarding the user includes information detected by the detection unit.

4. The information processing device according to claim 1, wherein
the information regarding the creator includes information regarding at least one of a state of the creator, a profile of the creator, a creation environment of the content, hardware information about a device used in creation of the content, and signal processing to be performed when the content is uploaded.

5. The information processing device according to claim 1, wherein
the information regarding the creator includes information corresponding to the information regarding the user.

6. The information processing device according to claim 1, wherein
the control unit estimates signal processing for the reproduction content as control for estimating the reproduction content to be output.

7. The information processing device according to claim 6, wherein
the signal processing for the reproduction content is a process of associating a video image or sound of the reproduction content recognized by the user with a video image or sound of the reproduction content recognized by the creator.

8. The information processing device according to claim 6, wherein
the reproduction content includes a video signal, and
the signal processing includes at least one of resolution conversion, dynamic range conversion, noise reduction, and gamma processing.

9. The information processing device according to claim 6, wherein
the reproduction content includes an audio signal, and
the signal processing includes at least one of band extension and sound localization.

10. The information processing device according to claim 6, wherein
the control unit acquires feedback about the reproduction content output on a basis of the signal processing, and further performs the signal processing on a basis of the feedback.

11. The information processing device according to claim 6, wherein
the acquisition unit further acquires a learning model that is generated on a basis of the information regarding the user and the information regarding the creator, and
the control unit estimates the signal processing on a basis of the learning model.

12. The information processing device according to claim 11, wherein
the learning model includes a set of coupling weight coefficients between neurons in a neural network, and
the control unit estimates the signal processing on a basis of a neural network in which a coupling weight coefficient included in the learning model is set.

13. The information processing device according to claim 12, wherein
the learning model includes a set of coupling weight coefficients between neurons in a neural network that learns a correlation to reproduction content signal processing corresponding to a combination of the reproduction content, the information regarding the user, and the information regarding the creator, and
the control unit performs estimation of the signal processing corresponding to the combination of the reproduction content, the information regarding the user, and the information regarding the creator, on a basis of a neural network in which a coupling weight coefficient included in the learning model is set.

14. The information processing device according to claim 1, wherein
the control unit controls an external device to output a scene-producing effect corresponding to the reproduction content.

15. The information processing device according to claim 14, wherein
the external device includes an effect producing device that outputs a scene-producing effect, and
the control unit controls the effect producing device, on a basis of the information regarding the user and the information regarding the creator detected by the detection unit.

16. The information processing device according to claim 15, wherein
the effect producing device includes an effect producing device that uses at least one of wind, temperature, water, light, scent, smoke, and physical movement.

17. The information processing device according to claim 14, wherein
the acquisition unit further acquires a learning model that is generated on a basis of the information regarding the user and the information regarding the creator, the learning model being of a control process for the effect producing device, and
the control unit estimates a process of controlling the effect producing device, on a basis of the learning model.

18. An information processing method comprising:
an acquisition step of acquiring reproduction content;
a detection step of acquiring information regarding a viewing status;
a control step of estimating reproduction content to be output, on a basis of information regarding a user who views the reproduction content and information regarding a creator who has created the reproduction content; and
an output step of outputting the estimated reproduction content.

19. An artificial intelligence system comprising:
a first neural network that learns a correlation with reproduction content signal processing corresponding to a combination of reproduction content, information regarding a user who views the reproduction content, and information regarding a creator who has created the reproduction content;
a second neural network that learns correlations among the reproduction content, information regarding the user, and recognition by the user of the reproduction content; and
a third neural network that learns correlations among the reproduction content, information regarding the creator, and recognition by the creator of the reproduction content.

20. The artificial intelligence system according to claim 19, wherein,
in a first step, learning by the first neural network is stopped, learning by the second neural network is conducted to minimize a loss function that is defined on a basis of a difference between estimated recognition by the user of the reproduction content and actual recognition by the user, the estimated recognition having been estimated by the second neural network, and learning by the third neural network is conducted to minimize a loss function that is defined on a basis of a difference between estimated recognition by the creator of the reproduction content and actual recognition by the creator, the estimated recognition by the creator having been estimated by the third neural network, and,
in a second step, learning by the second neural network and the third neural network is stopped, and learning by the first neural network is conducted to minimize a loss function that is defined on a basis of a difference between estimated recognition by the user of the reproduction content and estimated recognition of the creator of the reproduction content, the estimated recognition by the user having been estimated by the first neural network on a basis of the reproduction content, the information regarding the user who views the reproduction content, and the information regarding the creator that has created the reproduction content, the estimated recognition by the creator having been estimated by the third neural network.
